# EUROPEAN PATENT APPLICATION

(11) **EP 4 586 209 A1**
(43) Date of publication of application: **16.07.2025**
(21) Application number: 24199876.4
(22) Date of filing: 11.09.2024
(51) Int. Cl.: G06V 10/30, G06V 10/74, G06V 10/762, G06V 10/94, G06V 20/13, G06T 3/40, G06T 7/73, G06V 10/40, G06V 10/82

(54) **SYSTEM AND METHOD FOR PERFORMING GEOLOCATING AND GEOREFERENCING OF SENSING DATA AT REMOTE SOURCES**

(30) Priority: 11.09.2023 US 202363537640 P
(71) Applicant: Ubotica Technologies Ltd., D11 KXN4 Dublin (IE)
(72) Inventor: GUERRERO DEL POZO, Diego, Dublin, D11 KXN4 (IE); RIJLAARSDAM, David, Dublin, D11 KXN4 (IE); DUNNE, Aubrey, Dublin, D11 KXN4 (IE); VELASCO MATA, Alberto, Dublin, D11 KXN4 (IE); ESPINOSA ARANDA, José Luis, Dublin, D11 KXN4 (IE)
(74) Representative: FRKelly

(57) **Abstract**

Methods and systems for detecting and geolocating features in satellite-captured images include an edge device (e.g., satellite, etc.) receiving from a mission operations center (MOC) an acquisition context and a transformation for mapping pixel coordinates to geographic coordinates and storing the acquisition context and transformation in onboard memory. The edge device may capture one or more images, detect one or more features in the one or more captured images, process the detected features by filtering noise and clustering contiguous features, apply the transformation to the pixel coordinates of the processed detected features to determine geographic coordinates of the detected features, generate geolocation data for the detected features based on the geographic coordinates, and transmit the geolocation data and associated metadata over a low-bandwidth link.

## Description

### RELATED APPLICATIONS

This application claims the benefit of priority to U.S. Provisional Patent Application No. 63/537,640 entitled "System and Method for Performing Geolocating and Georeferencing of Sensing Data at Remote Sources" filed on September 11, 2023 the entire contents of which are hereby incorporated by reference for all purposes.

### BACKGROUND

Generally, georeferencing refers to the task or process of establishing a mapping between the coordinate system of a spatial representation (e.g., an image of a geographic region, etc.) and the actual geographic region in its spatial reference system. Georeferencing may include registering the spatial representation to its corresponding geographic location. For example, when the spatial representation is a satellite image, georeferencing may include mapping that image to geographic coordinates (e.g., latitude and longitude, etc.). Georeferencing may be related to geolocation and georegistration.

Geolocation may include determining the location of a specific feature within a geographic reference system. For example, when a feature is an object in a satellite image, geolocation may include identifying the spatial position of the object within a geographic reference frame (e.g., using latitude and longitude, etc.). While georeferencing may include mapping an entire satellite image (or a portion of it) into global geographic coordinates, geolocation may include identifying the geographic coordinates of specific features within the image. Thus, the features within a georeferenced image may subsequently be geolocated.

Georegistration may include aligning a satellite image with a larger reference image that has already been accurately positioned within the world coordinate system. Georegistration may help ensure that the satellite image corresponds precisely to its correct location in the larger geographic framework. Georegistration may improve the accuracy of georeferencing and geolocation by aligning the satellite image with a reference image, which may allow for the precise identification and analysis of features within the satellite image in relation to the known geographic reference system.

### SUMMARY

Various aspects include methods performed by a processing system in a satellite for detecting and geolocating features in satellite-captured images, which may include receiving from a mission operations center (MOC) an acquisition context and a transformation for mapping pixel coordinates to geographic coordinates, storing the acquisition context and transformation in onboard memory, capturing one or more images, detecting one or more features in the one or more captured images, processing the detected features by filtering noise and clustering contiguous features, applying the transformation to the pixel coordinates of the processed detected features to determine geographic coordinates of the detected features, generating geolocation data for the detected features based on the geographic coordinates, and transmitting the geolocation data and associated metadata over a low-bandwidth link.

In some aspects, receiving from the MOC the acquisition context and the transformation for mapping pixel coordinates to geographic coordinates includes receiving from the MOC the acquisition context and a matrix that defines the relationship between pixel coordinates in the captured images and corresponding geographic coordinates, in which the matrix is applied to each pixel in the detected features to compute the precise geographic location of the features.

In some aspects, receiving from the MOC the acquisition context and the transformation for mapping pixel coordinates to geographic coordinates includes receiving from the MOC the acquisition context and a function that computes geographic coordinates based on the pixel coordinates, the satellite's orientation, and environmental factors.

In some aspects, receiving from the MOC the acquisition context and the transformation for mapping pixel coordinates to geographic coordinates further includes receiving a feature detection method information structure that identifies a technique for identifying, detecting, or extracting relevant features or patterns from images.

In some aspects, detecting one or more features in the one or more captured images includes using a neural network to detect the one or more features in the one or more captured images. In some aspects, transmitting the geolocation data and associated metadata over the low-bandwidth link includes transmitting geolocation and type data over the low-bandwidth link. In some aspects, transmitting the geolocation data and associated metadata over the low-bandwidth link includes downscaling the images to generate thumbnails and sending the generated thumbnails over the low-bandwidth link. In some aspects, transmitting the geolocation data and associated metadata over the low-bandwidth link includes transmitting the geolocation data and associated metadata to the MOC over the low-bandwidth link. In some aspects, transmitting the geolocation data and associated metadata over the low-bandwidth link includes transmitting the geolocation data and associated metadata to ground-based user equipment over the low-bandwidth link. In some aspects, transmitting the geolocation data and associated metadata over the low-bandwidth link includes transmitting over the low-bandwidth link the geolocation data and associated metadata to a follow-on satellite deployed at the extreme network edge.

Further aspects may include a computing device (e.g., edge device, satellite, etc.) having at least one processor or processing system configured with processor-executable instructions to perform various operations corresponding to the methods discussed above. Further aspects may include a computing device having various means for performing functions corresponding to the method operations discussed above. Further aspects may include a non-transitory processor-readable storage medium having stored thereon processor-executable instructions configured to cause at least one processor or processing system to perform various operations corresponding to the method operations discussed above.

### BRIEF DESCRIPTION OF THE DRAWINGS

The accompanying drawings, which are incorporated herein and constitute part of this specification, illustrate exemplary aspects of the invention and, together with the general description given above and the detailed description given below, serve to explain the features of the invention.
FIG. 1 is a component block diagram illustrating a system that includes edge devices in the form of satellites and a centralized site connected to a transmission site suitable for implementing various embodiments.
FIGs. 2A-2D are activity diagrams illustrating overview methods of performing geolocating and georeferencing in accordance with some embodiments.
FIG. 3 is a component block diagram illustrating example components in a computing system configured to obtain a similarity measure between two images using a neural network in accordance with some embodiments.
FIG. 4 is an illustration of a reference region and the target region in satellite imagery in accordance with some embodiments.
FIG. 5 is an illustration of a suggested contrastive loss functions diagram in accordance with some embodiments.
FIG. 6 is an illustration of a comparison of an image versus a shifted, rotated and masked version) in accordance with some embodiments.
FIG. 7 is an illustration of temporal variations in satellite imagery in accordance with some embodiments.
FIG. 8 is an illustration of satellite imagery tiling with and without overlapping in accordance with some embodiments.
FIG. 9 is an illustration of a comparison of several region selection strategies in accordance with some embodiments.
FIG. 10 is a process flow diagram illustrating an image-matching process in accordance with some embodiments.
FIG. 11 is an exemplary illustration of the multiphase matching method in accordance with some embodiments.
FIG. 12 is an exemplary illustration of the discarding of an image that has been incorrectly matched in accordance with some embodiments.
FIG. 13 is an exemplary illustration of the localization of a position based on correctly matched images in accordance with some embodiments.
FIG. 14 is an illustration of the usage of the system for vehicle localization in accordance with some embodiments.
FIG. 15 is a process flow diagram illustrating a method of performing geolocating and georeferencing using the DiPAGEO method in accordance with some embodiments.
FIG. 16 is a process flow diagram illustrating the parts of the DiPAGEO method performed by the edge device in accordance with some embodiments.
FIG. 17 is a process flow diagram illustrating the parts of the DiPAGEO method performed by the centralized site in accordance with some embodiments.
FIG. 18 is an activity diagram illustrating an overview of a method of performing geolocating and georeferencing using the RaPID-GEO method in accordance with various embodiments.
FIG. 19 is a process flow diagram illustrating the parts of the RaPID-GEO method performed by the centralized site in accordance with some embodiments.
FIG. 20 is a process flow diagram illustrating the parts of the RaPID-GEO method performed by the edge device in accordance with some embodiments.
FIG. 21 and 22 are component diagrams of an edge device in the form of a satellite that is suitable for implementing some embodiments.

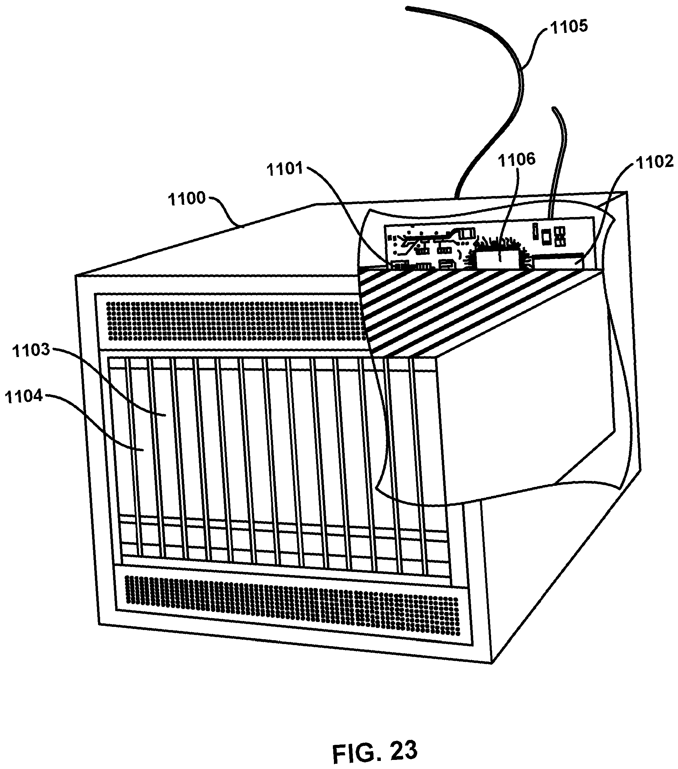

FIG. 23 is a component diagram of a server that is suitable for implementing some embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The terms "uplinking" and "uploading" may be used interchangeably herein to refer the transmission of data, commands, or other information from a local or ground-based device to a remote or terrestrial system, such as a satellite. Uplinking typically occurs in satellite communications, where data is transmitted from Earth to a satellite.

The terms "downlinking" and "downloading" may be used interchangeably herein to refer to the transmission of data, commands, or other information from a remote or terrestrial system, such as a satellite, to a local or ground-based device. Downlinking typically occurs in satellite communications, where data is transmitted from a satellite to Earth.

The term "computing device" may be used herein to refer to any of a wide variety of electronic devices capable of executing programmed instructions. These devices include, but are not limited to, server computing devices, personal computers, laptop computers, tablet computers, edge devices, user equipment (UE), multimedia Internet-enabled cellular telephones, smartphones, smart wearable devices (e.g., smartwatches, smart glasses, fitness trackers, smart clothing, jewelry, shoes, etc.), Internet-of-Things (IoT) devices (e.g., smart televisions, smart speakers, smart locks, lighting systems, smart switches, smart doorbell cameras, security systems, smart thermostats, connected appliances, etc.), connected vehicles (e.g., autonomous vehicles, electric vehicles), satellites (e.g., CubeSats, small satellites, etc.), drones, high-altitude platform stations (HAPS), augmented reality (AR) and virtual reality (VR) devices, AI-enabled edge devices, and other similar devices that include memory and a programmable processor to provide the functionality described herein.

The terms "centralized site," "centralized device," "centralized site/device," and "Mission Operations Centre," (MOC) may be used interchangeably herein to refer to a control site that includes one or more computing devices (or "centralized devices") configured to initiate, provision, store data (e.g., collected data, data obtained from other sources, augmented data, etc.), enable data labeling, train AI models, communicate with and/or control edge devices, etc.. These centralized sites/devices may also manage and orchestrate distributed computing resources, coordinate mission operations, and provide oversight and control for remote and autonomous systems, such as satellites and drones.

For ease of reference and to focus on the relevant features or functionalities, some embodiments are described herein with reference to a MOC on Earth and one or more edge devices deployed in space. However, it should be understood that the described features and functionalities may be applicable to other types of edge devices, systems, configurations, or deployments. As such, nothing in this application should be used to limit the claims or disclosures herein to a MOC or centralized site/device on Earth and edge devices deployed in space unless expressly recited as such within the claims.

The terms "edge device," "platform," and "edge application" may be used interchangeably herein to refer to any computing device, satellite (e.g., CubeSats, small satellites, orbiting systems, space-based platforms, etc.), connected vehicle (e.g., trucks, cars, etc.), electric scooter, train, tram, metro (which may have connectivity for brief periods while in stations), aircraft, drone (land-based, sea-based, or airborne), high-altitude balloon, high-altitude platform station (HAPS), smartphone, smart wearable device, Internet of Things (IoT) device, eMobility device (e.g., electric scooters, electric bikes), robot, nanobot, or similar computing system, device, or object that includes memory, sensors, processors, and communication circuits for communicating with computing devices at one or more centralized sites. The processor within an edge device may be a programmable processor or a fixed programmed processor (e.g., a pre-programmed FPGA or ASIC) with associated reconfigurable parameters stored in memory. Edge devices are often resource-constrained, with limited processing power, memory capacity, battery life, and/or bandwidth resources.

The term "network edge" may be used herein to refer to the point at which data may be processed or analyzed as close as possible to its source or destination, particularly in scenarios in which reducing latency, conserving bandwidth, and enhancing real-time decision-making are particularly important. Processing data at the network edge may reduce the need for extensive data transmission to centralized servers or cloud infrastructure. The specific location of the network edge may vary based on the application, such as being on the device itself in satellite and IoT networks or at the boundary of a local network interfacing with broader networks like the Internet.

The term "extreme network edge" is used herein to refer to the most remote and resource-constrained points in a network in which data processing and analysis take place, often far removed (physically, logically, and/or in terms of connectivity) from the centralized site/device or centralized computing resources. Examples include but are not limited to environments such as low Earth orbit, geosynchronous orbit, deep space, underwater regions, and isolated terrestrial areas such as deserts or polar regions. Devices operating at the extreme network edge (e.g., satellites, autonomous vehicles, drones, sensor networks, etc.) often face unique and significant challenges due to constraints on processing power, memory, and bandwidth. As a result, devices deployed at the extreme network edge are often highly specialized and configured to perform specific tasks (e.g., data collection and communication, etc.) with limited local resources (e.g., bandwidth, processing, storage, power, etc.) and/or with little or no reliance on, or reliable access to, external infrastructure.

The terms "machine learning algorithm," "artificial intelligence model" and the like may be used herein to refer to any of a variety of information structures that may be used by a computing device to perform a computation or evaluate a specific condition, feature, factor, dataset, or behavior on a device. Examples of artificial intelligence (AI) algorithms include network models, neural network models, inference models, neuron models, classifiers, random forest models, spiking neural network (SNN) models, convolutional neural network (CNN) models, recurrent neural network (RNN) models, deep neural network (DNN) models, generative network models, ensemble networks, generative adversarial networks, and genetic algorithm models. In some embodiments, a machine learning algorithm may include an architectural definition (e.g., the neural network architecture, etc.) and one or more weights (e.g., neural network weights, etc.).

The term "AI edge device" may be used herein to refer to an edge device that is configured to perform AI operations locally on the device and/or to work in conjunction with other devices (e.g., another edge device, centralized site/device, etc.) that perform AI operations. For example, an AI edge device may include an edge AI processor configured to perform "inference" and/or to deploy or utilize a neural network that executes machine learning algorithms locally on the device. As another example, an AI edge device may be configured to collect data on the device, transmit the collected data to a centralized site/device for inference processing to generate an overall inference result, receive the overall inference result from the centralized site/device, and then perform an action based on the received result. In addition, an AI edge device may be part of a group of edge devices (potentially of different types, such as satellites, drones, or IoT devices) that collaborate to achieve federated learning in which each device contributes to a shared model while processing data locally (e.g., to enhance privacy, reduce latency, etc.).

The term "AI model" may be used herein to refer to a wide variety of information structures that may be used by a computing device to perform a computation or evaluate a specific condition, feature, factor, dataset, or behavior on a device. Examples of AI models include network models, neural network models, inference models, neuron models, classifiers, random forest models, spiking neural network models, Siamese neural network (SNN) models, convolutional neural network (CNN) models, recurrent neural network (RNN) models, deep neural network (DNN) models, generative network models, and genetic algorithm models. In some embodiments, an AI model may include an architectural definition (e.g., the neural network architecture, etc.) and one or more weights (e.g., neural network weights, etc.).

The terms "image" and "frame" may be used herein to refer to visual data acquired by a camera device or other imaging sensors. An image may include a multitude of color channels and pixels, as well as additional metadata such as timestamps, geolocation information, and sensor-specific data (e.g., focal length, exposure settings). Some embodiments may include an image or frame that includes data captured across various spectra, including visible light, infrared, multispectral, hyperspectral, and synthetic aperture radar (SAR). This data may be used for a range of applications, including geolocation, object detection, and environmental monitoring.

The term "region of interest" (ROI) is used herein to refer to a specific subset of an image or frame that holds particular significance in a given context. The ROI may vary in size and shape, depending on the application, and may be used for focused analysis, processing, or decision-making. The ROI may encompass an area of the image that includes important features or data, such as a detected object, a specific geographic area, or a relevant pattern. The ROI may also be empty or extended to cover the entire frame.

The term "neural network" may be used herein to refer to an interconnected group of processing nodes (or neuron models) that collectively operate as a software application or process that controls a function of a computing device and/or generates an overall inference result as output. Individual nodes in a neural network may attempt to emulate biological neurons by receiving input data, performing simple operations on the input data to generate output data, and passing the output data (also called "activation") to the next node in the network. Each node may be associated with a weight value that defines or governs the relationship between input data and output data. A neural network may learn to perform new tasks over time by adjusting these weight values. In some cases, the overall structure of the neural network and/or the operations of the processing nodes do not change as the neural network learns a task. Rather, learning is accomplished during a "training" process in which the values of the weights in each layer are determined. As an example, the training process may include causing the neural network to process a task for which an expected/desired output is known, comparing the activations generated by the neural network to the expected/desired output, and determining the values of the weights in each layer based on the comparison results. After the training process is complete, the neural network may begin "inference" to process a new task with the determined weights.

The term "inference" may be used herein to refer to a process that is performed at runtime or during the execution of the software application program corresponding to the neural network. Inference may include traversing the processing nodes in the neural network along a forward path to produce one or more values as an overall activation or overall "inference result."

The term "classifier" may be used herein to refer to an AI model and/or information structures that may be used by a device processor to evaluate collected data or a specific feature (or factor, condition, data point, operation, component, etc.). For example, a classifier may include decision nodes (e.g., neural networks, decision stumps, boosted decision trees, etc.) that each includes a weight value and a test question/condition suitable for evaluating the collected data.

The term "deep neural network" may be used herein to refer to a neural network that implements a layered architecture in which the output/activation of a first layer of nodes becomes an input to a second layer of nodes, the output/activation of a second layer of nodes becomes an input to a third layer of nodes, and so on. As such, computations in a deep neural network may be distributed over a population of processing nodes that make up a computational chain. Deep neural networks may also include activation functions and sub-functions between the layers. The first layer of nodes of a multilayered or deep neural network may be referred to as an input layer. The final layer of nodes may be referred to as an output layer. The layers in-between the input and final layer may be referred to as intermediate layers.

The term "convolutional neural network" (CNN) may be used herein to refer to a deep neural network in which the computation in at least one layer is structured as a convolution. A convolutional neural network may also include multiple convolution-based layers, which allows the neural network to employ a very deep hierarchy of layers. In convolutional neural networks, the weighted sum for each output activation is computed based on a batch of inputs, and the same matrices of weights (called "filters") are applied to every output. These networks may also implement a fixed feedforward structure in which all the processing nodes that make up a computational chain are used to process every task, regardless of the inputs. In such feed-forward neural networks, all of the computations are performed as a sequence of operations on the outputs of a previous layer. The final set of operations generate the overall inference result of the neural network, such as a probability that an image includes a specific object (e.g., a person, cat, watch, edge, etc.) or information indicating that a proposed action should be taken.

The term "Siamese neural network" (SNN) may be used herein to refer to a neural network architecture that includes two or more identical subnetworks that share the same parameters (weights and biases). These subnetworks may be used to compare two different inputs and produce a similarity score or other comparative metric. SNNs may be particularly useful in tasks in which the goal is to determine the similarity of two different inputs. The SNN architecture allows the network to learn a shared embedding space in which similar inputs are placed closer together and dissimilar inputs are placed farther apart. The subnetworks may process each input independently, and their outputs may be combined at the final layer to produce the similarity score.

The term "embedding layer" may be used herein to refer to a specialized layer within a neural network, typically at the input stage, that transforms continuous or discrete categorical values or tokens into continuous, high-dimensional vectors. An embedding layer may also transform high-dimensional data into low-dimensional vectors (e.g., using "dimensionality reduction" techniques, etc.). This is particularly useful when the original data is complex or too large to handle efficiently. The embedding layer may also convert tokens (typically low-dimensional entities) into high-dimensional vectors. An embedding layer may operate as a lookup table in which each unique token or category is mapped to a point in a continuous vector space. The vectors may be refined during the model's training phase to encapsulate the characteristics or attributes of the tokens in a manner conducive to the tasks the model is configured to perform.

The term "embedding" may be used herein to refer to an information structure (e.g., vector, etc.) that includes the semantics and the most relevant information about the input used (e.g., the whole or partial image of a region, etc.). Similarly, the term "vector embeddings" may be used herein to refer to continuous high-dimensional vectors and/or the transformation of tokens into high-dimensional vector representations within an embedding layer. These vector embeddings may capture the semantic meaning and context of words, images, or other data elements in relation to the entire dataset. Some embodiments may be configured to generate and use vector embeddings to facilitate more accurate comparisons of semantic similarities. Vector embeddings may encode tokens as continuous, high-dimensional vectors, with each dimension representing different features. The high-dimensional nature of vector embeddings supports a dense encapsulation of information, allowing for a nuanced representation of each token that reflects its complex relationships with other tokens or data points within the dataset.

The term "feature detection method" may be used herein to refer to an information structure that identifies a process or technique that a computing device, edge device, or centralized site/device may use to identify, detect, or extract relevant features or patterns from data (e.g., images, signals, etc.). Feature detection methods may include classical algorithms (e.g., edge detection, template matching, etc.), artificial intelligence models (e.g., neural networks, convolutional neural networks, etc.), or a combination of these. In some embodiments, the feature detection method may include multiple neural networks. A feature detection method may also include pre-processing and post-processing steps to enhance the detection accuracy or to filter noise. In some embodiments, the feature detection method may be represented as a predefined algorithm stored on the device or as a reference to a model or method that the device accesses remotely. In addition, feature detection methods may include neural networks that have been pre-trained to detect specific types of features or anomalies, such as detecting objects in an image or identifying patterns in a time-series dataset. The selected feature detection method may vary depending on the device's available resources, the complexity of the detection task, and the specific application context.

The term "global navigation satellite system" (GNSS) may be used herein to refer to a satellite constellation that provides positioning, navigation, and timing services on a global or regional scale. GNSS systems may include Global Positioning System (GPS), GLONASS, Galileo, BeiDou, and other regional satellite systems. These systems allow for precise geolocation and navigation by determining the position of a GNSS receiver relative to the Earth's surface.

The term "ground control point" (GCP) may be used herein to refer to a readily identifiable and stable feature in an image whose exact geolocation is accurately known and/or has been precisely surveyed on the ground. GCPs may be used for georeferencing and calibrating remote sensing data and allow for the accurate mapping of images to a geographic coordinate system. They may include natural features like intersections of roads or man-made markers specifically placed for geospatial referencing.

The term "ground sampling distance" (GSD) may be used herein to refer to the distance between the center points of two samples (e.g., pixels) taken on the ground. For example, GSD may be a value that identifies the distance between the center points of two adjacent pixels or samples on the ground as captured by an imaging sensor. GSD may be used in remote sensing and photogrammetry to define the spatial resolution of an image (e.g., a smaller GSD indicates higher resolution, etc.). GSD may influence the accuracy and detail of the features that may be discerned in the captured data.

The terms "high-altitude platform stations" (HAPS) and "atmospheric satellites" may be used herein to refer to high-altitude aircraft that may be used for observation or communication services (operating similar to artificial satellites, etc.).

The term "tip and cue" may be used herein to refer to the process of monitoring a region or object and triggering a complementary sensor platform to acquire additional imagery or data of the same area. A tip and cue operation may be used in multi-platform surveillance or observation systems in which an initial detection by one platform (the "tip") prompts another platform (the "cue") to capture more detailed or specialized data.

The term "two-line element set" (TLE) may be used herein to refer to a data format encoding a list of orbital elements of any object orbiting the Earth at a given moment. It may include useful information such as inclination, eccentricity, time of day, etc.

The term "digital elevation model" (DEM) may be used herein to refer to a 3D representation of the altitude and bare ground of a region excluding any surface objects. For example, a DEM may be a 3D representation of the Earth's surface that captures the elevation of bare ground, excluding any surface objects like buildings or vegetation. DEMs may be generated using various techniques, including satellite radar, LiDAR, and photogrammetry.

The term "field of view" (FOV) may be used herein to refer to a value or information structure that identifies or represents the extent of an observable area that an imaging device or sensor may capture at a given moment. The FOV may define the portion of the Earth's surface that is visible and may be imaged by the satellite's sensor during a single pass. The FOV may be influenced by factors such as the design of the imaging system, including the focal length of the lens and the size of the sensor, as well as the altitude or distance between the imaging device and the observed scene.

The term "georeferencing" may be used herein to refer to technologies, techniques, functions, or operations for aligning or mapping a spatial representation (e.g., an image or a dataset) to geographic coordinates within a specific spatial reference system. Georeferencing operations may include associating each pixel or data point in the spatial representation with a corresponding location on the Earth's surface (e.g., latitude and longitude, etc.). These operations may include the use of GCPs, reference images, or transformation algorithms so that the spatial representation accurately reflects its real-world geographic position.

The term "geolocation" may be used herein to refer to technologies, techniques, functions, or operations for determining the geographic position of a specific feature, object, or data point within a spatial reference system. Geolocation operations may include identifying the coordinates (e.g., latitude and longitude) of the feature or object relative to the Earth's surface. These operations may use various data sources, including satellite imagery, GPS signals, and sensor data, to accurately pinpoint the location of the feature.

The term "Earth observation" (EO) may be used herein to refer to the collection, analysis, and interpretation of data about the Earth's physical, chemical, and biological systems, typically using remote sensing technologies such as satellites, aircraft, or drones. EO operations may include capturing imagery or other sensor data to monitor natural and human-made phenomena, including weather patterns, land use, environmental changes, natural disasters, and urban development. Data gathered through EO may be used for a variety of applications, such as environmental monitoring, resource management, climate change studies, and disaster response efforts.

The term "acquisition context" may be used herein to refer to an information structure that includes a set of conditions, parameters, and metadata associated with the capture of a dataset, image, or signal by a sensor or imaging device. The acquisition context may include one or more of the "target acquisition area" (the specific geographic or spatial region being imaged or sensed) and the "target acquisition state" (the state or condition of the device or environment during acquisition). Acquisition context may also include, but is not limited to, factors such as time, weather conditions, orientation of the device, device settings (e.g., resolution, exposure), and environmental influences. These factors may affect the quality and characteristics of the captured data and may be useful in georeferencing, classification, and image or data analysis.

The term "transformation" may be used herein to refer to an information or mathematical structure that includes data or identifies an operation that modifies or converts data from one form, format, or coordinate system to another. In various embodiments, the transformation may be a matrix or a function. A transformation matrix may store data that may be used to retrieve pre-defined values through a lookup process based on input parameters such as pixel coordinates. A transformation function may include a set of mathematical operations that compute the necessary conversion in real time using input parameters, such as coordinates and angles. The transformation function may allow for more dynamic and resource-efficient processing by calculating the transformation rather than relying on stored values, which may be particularly advantageous in systems that have limited storage or bandwidth, such as satellite applications.

Geolocation and georeferencing of satellite images are important operations within the Earth Observation (EO) domain. Georeferencing aligns an image containing a feature of interest with the Earth's reference frame to allow for the precise identification of the feature's location. This process may include adding geographic information to the image and associating it with a real-world location. The geospatial information provided by satellite imagery, such as geospatial intelligence, is often highly valuable.

There are two primary methods of georeferencing: direct georeferencing and indirect georeferencing, both of which are applied after image acquisition. Direct georeferencing may use information about the satellite and its imaging system at the time of capture to determine the precise FOV of the image. Direct georeferencing may use data from onboard sensors, such as attitude sensors (e.g., star sensors, inertial measurement units (IMUs), magnetometers), positional data (e.g., GNSS measurements, TLE-based position estimations, radar ranging data), and transformation matrices that relate the detector plane to the satellite's body-fixed reference frame. Deriving accurate transformation matrices (e.g., through periodic geometric calibration, etc.) is important for determining the projection of each image pixel onto the Earth's surface. The accuracy of direct georeferencing may depend on the precision of the satellite's state and image data, which may be limited in smaller and less expensive satellites, potentially leading to reduced georeferencing accuracy.

Indirect georeferencing may use information from the captured image and reference images to align or map the spatial representation (e.g., an image or a dataset) to geographic coordinates within the spatial reference system. Indirect georeferencing may include matching GCPs in the image to reference GCPs with known exact locations on Earth. These GCPs may be artificial (e.g., by placing GNSS beacons on the ground before image capture) or extracted from the image using AI or computer vision techniques and compared to reference images. Indirect georeferencing is generally more accurate than direct georeferencing but often requires significant computational resources and an initial estimate of pixel locations within the Earth reference frame to narrow the search space for reference GCPs.

An important advantage of indirect georeferencing is its ability to achieve high accuracy without relying on the satellite's position and orientation sensors. The indirect georeferencing operations may also include several operations for correcting various distortions, such as geometric distortion correction to address issues caused by satellite or sensor geometry, radiometric correction to adjust for sensor or lighting conditions, orthorectification to correct for terrain-induced distortions, and registration to align the image with a reference image. Classical registration may be a component of indirect georeferencing that includes identifying tie points in the satellite image and mapping them to precisely located GCPs. Orthorectification may include using DEMs to correct the perspective effects caused by imaging non-planar land surfaces.

The various embodiments include a sensor-rich programmable AI and compute platform that may be deployed at the extreme network edge, ranging from terrestrial locations to low Earth orbit, geosynchronous orbit, and deep space. The AI and compute platform may use advanced AI techniques (e.g., convolutional neural network accelerators, neuromorphic accelerators, etc.) to perform complex data processing directly on edge devices (e.g., satellites, drones, etc.). The AI and compute platform may effectively address significant bandwidth constraints and other technical challenges associated with conventional edge devices by executing inference directly on the edge device. This may allow the edge device to transmit only metadata back to the centralized site, significantly reducing the required bandwidth and accelerating the generation of alerts based on high-resolution imagery and other sensor data.

An advantage of deploying the networks for inference in the edge device is the ability to operate under constrained uplink and downlink bandwidth conditions, which are often major technical challenges for deploying new applications, solutions, products, and services. Being able to perform inference on board an edge device means that only metadata needs to be transmitted back to the cloud or users. This may significantly reduce the time and bandwidth required to generate alerts, particularly where video or high-resolution image data is being used as input to the inference engine. These alerts may include notifications of forest fires, blight conditions, or destructive insect proliferation and may trigger further actionable events in various computing systems. For example, the alerts may be used as inputs for further actionable events that could occur automatically and without any human intervention.

Recent advances in processor technologies in the field of edge computing have allowed for ever more complex algorithms to be implemented at the edge of the network (e.g., at or co-located with the sensor that acquires the data to be processed). AI algorithms, known for their flexibility and ability to learn and adapt to specific applications, are increasingly becoming the preferred choice for edge computing. The embodiments may significantly reduce the bandwidth and energy required to transmit the information by orders of magnitude by overcoming various technical challenges associated with conventional solutions to adequately process data at or near its source.

In recent years, it has become increasingly feasible to perform AI operations on small satellites (e.g., SmallSats, CubeSats, etc.) using edge computing. Previously, the lack of sufficient computing power on these satellite platforms made AI operations impractical. The advent of AI on satellites has opened new possibilities for extracting data directly onboard from Earth Observation (EO) imagery. The embodiments may allow for the extraction of insights directly on the satellite, which may significantly reduce the amount of data that needs to be downlinked compared to raw data transmission. This may, in turn, allow for smaller information packets to be transmitted over low-latency, low-bandwidth links that are not suitable for transmitting raw data. For example, some embodiments may allow for detecting a forest fire from EO imagery onboard a satellite and the immediate transmission of the fire's location to emergency services (i.e., to facilitate a swift response, etc.). An important aspect of these operations is the accurate geolocation of the fire within the EO imagery before the information is transmitted to emergency services.

Generally, processing EO images onboard satellite systems to extract useful information may require that this information be accurately placed within an Earth reference frame. For example, detecting a ship from satellite images is much more valuable if its precise location is known. The various embodiments may include components configured to perform geolocation and/or georeferencing operations either partially or fully onboard an edge device (e.g., on the satellite) for rapid geolocation of features extracted from EO data.

Some embodiments may include components configured to perform georeferencing by predetermining the locations of image pixels within the Earth reference frame prior to image capture.

Some embodiments may include components configured to perform Partially-onboard AI-driven Georeferencing for Earth Observation (DiPAGEO) operations that allow for the partial geolocation of images and features onboard the device, with the final georeferencing steps completed on the ground.

Some embodiments may include components configured to perform Rapid Predetermined Image Duality-based Georeferencing for Earth Observation (RaPID-GEO) operations that use predetermined pixel maps to accomplish fully on-board georeferencing for pre-planned imaging sessions.

The DiPAGEO and RaPID-GEO operations may be applicable to both EO and general remote sensing satellite imagery captured by various sensors, including red-green-blue (RGB), multi-spectral, hyper-spectral, and SAR sensors. In addition, these techniques may be used in other systems, such as image data captured by drones or HAPS. For example, HAPS platforms may be used for security monitoring to detect and locate incursions into geofenced regions. These operations may also be beneficial for maritime sensing (e.g., maritime SAR or sonar images, etc.) or other scenarios without aerial images (e.g., security monitoring, video surveillance, etc.).

Some embodiments may include methods of geolocating and georeferencing sensing data at a remote source, such as an edge device (e.g., a satellite such as a SmallSat or CubeSats, etc.). The methods may include the edge device processor capturing an image of a target region, dividing the captured image into a plurality of tiles, selecting a subset of the plurality of tiles based on a feature richness metric, generating an embedding for each selected tile using a pre-trained neural network model, collecting metadata (e.g., estimated geographic location, GSD, satellite orientation data, timestamp, etc.) associated with the captured image, and transmitting the generated embeddings and the collected metadata to a centralized site. A processor at the centralized site may receive the generated embeddings and the collected metadata from the edge device, retrieve a set of reference embeddings from a reference database based on the collected metadata, match the generated embeddings with the retrieved reference embeddings using a similarity metric, detect outliers among the matched embeddings based on their similarity scores, filter out the detected outliers to retain a set of consistently matched embeddings, calculate a geolocation for each tile corresponding to the retained matched embeddings based on the metadata, and output the calculated geolocation as a final georeferenced position for the target region.

In some embodiments, the edge device processor may be configured to capture the image of a target region by activating an image sensor to acquire a high-resolution image of a specific geographic area. This may allow the processor to obtain visual data for subsequent geolocation and georeferencing operations. For example, the processor may control the satellite's camera system to capture an image of a forested area for monitoring deforestation.

In some embodiments, the edge device processor may be configured to divide the captured image into a plurality of tiles by segmenting the entire image into smaller, uniformly sized sections, each representing a portion of the original image. For example, the processor may segment a satellite image into a grid of 256x256 pixel tiles to facilitate more detailed analysis. Dividing the image into tiles may make the data more manageable and allow the device to focus its limited processing resources on specific areas of interest.

In some embodiments, the edge device processor may be configured to evaluate each tile to determine the presence and concentration of significant features, such as edges, textures, or objects, and select only those tiles with the highest feature richness for further processing. For example, the processor may prioritize tiles that include distinct geographical features like rivers or roads, which may allow the edge device processor to focus limited resources on the most informative parts of the image.

In some embodiments, the edge device processor may be configured to apply or pass the selected tiles through a neural network that has been trained to extract and encode the most relevant features into a compact vector representation or embedding. For example, the processor may use an SNN or CNN to generate embeddings that encapsulate the spatial patterns within each tile. The generated embeddings may transform the raw image data into a more abstract yet information-rich format that is easier to compare and analyze.

In some embodiments, the edge device processor may be configured to collect metadata by gathering contextual information related to the captured image, such as its geographic coordinates, resolution, satellite orientation at the time of capture, and the exact capture time. For example, the processor may record that the image was taken at a latitude of 34.05°N and a longitude of 118.25°W, with a GSD of 0.5 meters per pixel. The processor may use the collected metadata to support accurate georeferencing and to assist in matching the image data with corresponding reference data.

In some embodiments, the edge device processor may be configured to transmit the processed data, including the embeddings and metadata, from the edge device to a centralized site for further analysis. For example, the processor on a satellite may send the embeddings and metadata to a ground station for final georeferencing, allowing the system to leverage more powerful computing resources at the centralized site for tasks requiring greater computational power or access to extensive reference data.

In some embodiments, the processor at the centralized site may be configured to receive a batch of embeddings and metadata from multiple satellites monitoring different regions. In some embodiments, the processor at the centralized site may query a pre-existing database to find reference embeddings that correspond to the general location, time, and other metadata of the received data. For example, the processor may search the database for embeddings generated from images of the same geographic region and time of year as the received image. These reference embeddings may provide a basis for comparing and matching the received embeddings and may enhance the accuracy of the matching process compared to conventional solutions that rely on less specific or less comprehensive reference data.

In some embodiments, the processor at the centralized site may be configured to match the generated embeddings with the retrieved reference embeddings by comparing each received embedding against the reference embeddings using a defined metric (similarity metric) that quantifies how similar the two embeddings are. For example, the processor may use cosine similarity or Euclidean distance to assess the closeness of the embeddings and identify the reference embeddings that most closely correspond to the features captured in the received image tiles.

In some embodiments, the processor at the centralized site may be configured to detect outliers by identifying any embeddings that do not fit well with the majority of the matched results and/or which otherwise indicate a potential mismatch or error in the data. For example, the processor may flag an embedding as an outlier in response to determining that its similarity score is significantly lower than that of other embeddings.

In some embodiments, the processor at the centralized site may be configured to remove the identified outliers from the set of matched embeddings, leaving only those that are consistent with the reference data. For example, the processor may automatically discard any embedding that does not meet a predefined similarity threshold. The processor may refine the data set to include only the most accurate and reliable matches.

In some embodiments, the processor at the centralized site may be configured to calculate a geolocation for each tile by using the consistent matched embeddings, along with the associated metadata, to determine the precise geographic coordinates of each tile. For example, the processor may use the geographic location metadata and orientation metadata to triangulate the exact position of features in the tiles and more accurately map the features in the image to their real-world positions.

In some embodiments, the processor at the centralized site may be configured to generate and send final georeferenced data that indicates the exact location of the target region on the Earth's surface to the relevant systems or users. For example, the processor may output the geolocation data to a GIS for further analysis or visualization. The processor may provide actionable geospatial information that may be used in various applications, such as disaster response, urban planning, or military operations.

In contrast to conventional Earth Observation (EO) methods that involve the storage and subsequent downlinking of large image datasets (hundreds to thousands of megabytes), the embodiments allow for the extraction of compact, data-light insight packets directly on the satellite. These insight packets, which typically consist of hundreds of bytes, include the most relevant information extracted from the image, such as the presence and size of a detected wildfire. By significantly reducing the data size, these insight packets may be transmitted over always-available inter-satellite links (ISLs) within seconds to minutes, allowing for rapid dissemination of important or critical information without waiting for the satellite to pass over a ground station. This direct transmission path bypasses the limitations of traditional ground station overpass schedules, typically available only once per 90-minute orbit, and prevents potential contention for bandwidth at ground stations. In addition, since the image data itself remains onboard the satellite, further delays associated with cloud processing and data forwarding are avoided.

Another important advantage of onboard insight extraction is the ability to immediately communicate actionable information to the appropriate authorities, such as fire services, through ISLs and the internet, without relying on ground station transmission or cloud processing. This low-latency approach may allow important alerts, such as the detection of a wildfire, to be available within seconds and/or for rapid response in dynamic situations. Traditional EO methods require that the entire image dataset be downlinked, stored, and processed before any valuable insights are generated, leading to delays of hours or even days. During this time, fast-moving events like wildfires may escalate, causing significantly more damage. By contrast, onboard extraction in accordance with the various embodiments may allow the most important information to be immediately available for decision-making and timely interventions.

While detecting a wildfire onboard the satellite provides valuable insight, the utility of this information may be greatly enhanced when paired with precise geolocation. For emergency response teams, knowing that a wildfire exists is insufficient unless the exact location is provided. The embodiments may allow the satellite to generate accurate geographic coordinates associated with the onboard-extracted insights, such as the wildfire's location, size, and spread. This geolocation data is important for ensuring that response teams can act effectively and in a timely manner based on accurate spatial information. Some embodiments may include geolocation methods that are specifically designed for this new paradigm of onboard insight extraction in which geolocation is derived in real time and transmitted directly to the end user without the need for the entire image to be downlinked.

Further, in current satellite-based EO workflows, images are acquired and stored onboard the satellite before being downlinked to a ground station during the next available overpass. This transmission process is bandwidth-limited, and there is no guarantee that the entire image can be downlinked in a single overpass due to competition for bandwidth from other satellites. Once downlinked, the image is stored locally at the ground station and eventually transmitted to a cloud processing node for analysis. Only after this entire dataset has been processed can the presence of a wildfire be confirmed, at which point a classical georeferencing algorithm is applied. The system may match image features (e.g., GCPs) with known geographic features and account for various distortions, including those introduced by the camera and the Earth's terrain (e.g., corrected using DEMs). Once this complex matching is complete, the image may be aligned with a high-fidelity map to determine the location of the wildfire. However, this highly accurate process may be delayed by the need for image transmission, storage, and cloud-based processing, leading to significant delays in geolocation and response times.

For fast-moving natural disasters like wildfires, time is of the essence. With wildfires capable of spreading at rates equivalent to the size of a football field per second, any delay in detecting and responding to the fire may result in substantial increases in damage. The traditional georeferencing methods currently used in EO systems often lead to delays of several hours to days before actionable insights are available. During this time, the wildfire may have expanded exponentially, leading to widespread destruction. The onboard insight extraction and immediate geolocation methods of the various embodiments may mitigate these delays, providing low-latency alerts that allow emergency services to respond in real time, potentially preventing significant damage.

The RaPID-GEO and DiPAGEO methods offer distinct advantages depending on the Earth observation scenario. RaPID-GEO may be more suitable for situations in which images are captured at known locations, such as areas prone to wildfires, with the necessary transformation context uplinked alongside the image. This method may use accurate satellite orientation control and provides geolocation directly on the satellite, which is suitable for real-time, direct-to-handset applications, such as alerting a firefighter's mobile device. On the other hand, DiPAGEO may be better suited for broader search operations in which the satellite continuously captures imagery across vast geographic areas, searching for events like wildfires. Unlike RaPID-GEO, DiPAGEO does not require the uplinking of contextual information for each image, making it a more flexible solution for large-area monitoring. In addition, DiPAGEO may be independent of satellite stability, using only the captured images to perform geolocation. In contrast, RaPID-GEO's performance may be tied to the orientation and sensing capabilities of the satellite.

Another difference between RaPID-GEO and DiPAGEO is the location in which geolocation data is generated. In RaPID-GEO, geolocation occurs directly on the satellite, allowing for near-instantaneous communication of alerts to end users, such as firefighters. This feature may be particularly beneficial for applications requiring real-time geolocation and immediate action. In contrast, DiPAGEO may require some ground-based processing of the downlinked data before geolocation is available, which could introduce a slight delay in the geolocation process. However, both methods avoid the need for full image downlinking, which is an important limitation of conventional solutions. By extracting and transmitting only the most critical data-such as geolocation coordinates-both the RaPID-GEO and DiPAGEO methods may significantly reduce the volume of data that needs to be transmitted, making them far more efficient and suitable for bandwidth-constrained environments like satellite communication.

Both RaPID-GEO and DiPAGEO may address the bandwidth limitations inherent in satellite communications. Conventional solutions rely on the full downlinking of large image files, followed by ground-based processing to generate geolocation data. However, these conventional solutions are impractical for the new paradigm of onboard insight extraction in which bandwidth is limited and the transmission of entire images is not feasible. By only downlinking small volumes of geolocation data, which are orders of magnitude smaller than the image files themselves, RaPID-GEO and DiPAGEO may allow for rapid geolocation without the need for extensive data transfer. This efficiency may be particularly important in scenarios in which a timely response is necessary, such as wildfire detection, where every second of delay can result in increased damage.

Another advantage of both RaPID-GEO and DiPAGEO is their ability to work directly with raw satellite data, without requiring the geometrical or radiometric corrections that are typically applied to images in traditional geolocation methods. By operating on raw data, the embodiments may generate geolocation insights without the overhead of pre-processing, further accelerating the time to action. As a result, the embodiments are well-suited for dynamic scenarios, such as emergency response, for which quick and accurate geolocation is important for mitigating disaster impacts.

The embodiments may improve the performance and functioning of the computing systems in several other ways. For example, the system may improve data transmission from satellites to Earth by encoding images into embeddings with fewer dimensions and lower storage requirements. This may be particularly advantageous for resource-constrained devices like SmallSats and CubeSats, which often rely on low-bandwidth, always-on connectivity. By reducing the amount of data to be transmitted, the system may alleviate bandwidth limitations, enhance device responsiveness, and enable more efficient and timely communication of important information for a wider range of applications. Further, reducing large data transfers may conserve key resources like power and bandwidth, which are important for effective satellite operation and thus have a significant impact on the performance and functionality of satellites.

Distributing geolocation operations between on-board and on-ground processing may improve the overall efficiency of the system. For example, the system may reduce the computational load on the satellite's onboard processors by performing compute-intensive reference embedding calculations on the ground and limiting onboard processing to inference tasks for image patches. This may accelerate the geolocation operations and allow the satellite to perform more complex tasks while using fewer processing resources. The system may deliver actionable insights faster and with greater accuracy, which may enhance device responsiveness and enable more efficient and timely communication of important information for a wider range of applications.

The embodiments may also process many different types of data, including panchromatic, RGB, SAR, and multispectral or hyperspectral data, broadening its utility across different scenarios. This robustness may allow the system to function effectively in diverse environments and applications, from Earth observation to navigation in GNSS-denied areas. The ability to accurately retrieve coordinates even without GNSS references may be a significant improvement to the performance, responsiveness, and effectiveness of the system in challenging environments or conditions.

The embodiments also provide a robust solution that adequately addresses a variety of technical challenges in imagery, such as shifts, occlusions, or depth distortion. The system may maintain the accuracy and reliability of its data, even in the presence of obstacles, by adapting training strategies to specific objectives and relying on high-quality training data. This flexibility may allow the system to function effectively in a wide range of scenarios, ultimately enhancing the overall performance and functionality of the system by, for example, enabling more efficient and timely communication of important information for a wider range of applications.

Additional improvements to the performance and functioning of the computing systems will be evident from the disclosures below.

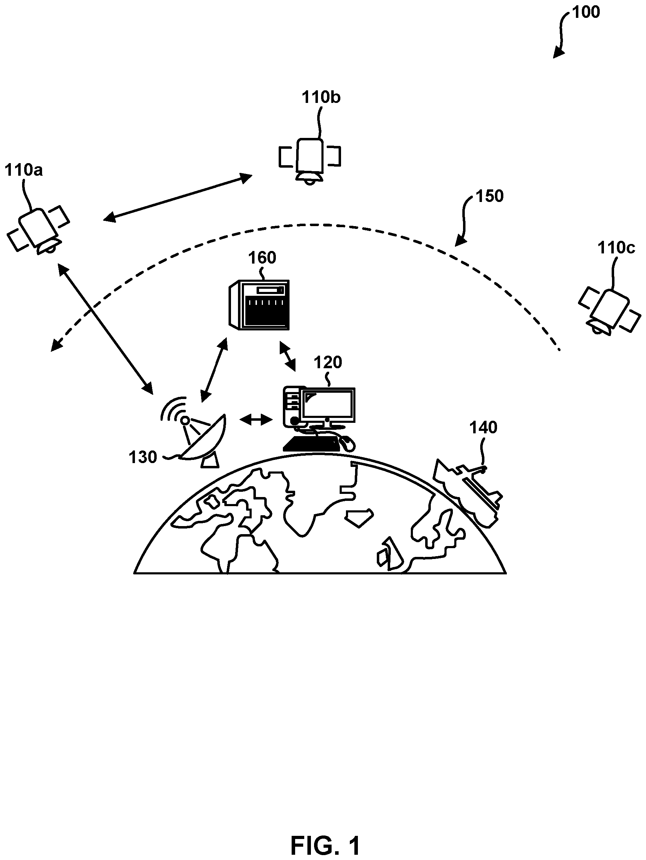

FIG. 1 is a component diagram illustrating an exemplary system 100 in which the edge devices are satellites in space 110a, 110b, and 110c, the centralized site or MOC 120 is connected to a transmission site 130, and there is a ship 140. Satellites 110a, 110b, and 110c follow the same orbit 150, and satellite 110b is a follow-on satellite relative to satellite 110a. Satellite 110c may be able to take photographs of ship 140, but satellite 110c may not have a downlink capacity sufficient for transmitting photos of ship 140 until satellite 110c is above transmission site 130. Satellites 110a, 110b, and 110c may be capable of transmitting small amounts of information (e.g., textual information, cropped versions of single images) to devices on Earth (e.g., computing devices) from any location along their orbit.

System 100 may also include an external system 160 that is configured to receive geolocated feature data or processed information from satellites 110a, 110b, or 110c. For example, the external system 160 may be a third-party analysis platform, an emergency response system, or an automated decision-making system. The external system 160 may trigger further actions based on the received data, such as initiating detailed analysis, deploying automated response systems, or notifying relevant parties based on the nature of the detected features.

Some embodiments may include methods performed by a processor for geolocating and georeferencing features in satellite images. In some embodiments, the method may include a MOC 120 that uses an acquisition context (e.g., target acquisition area, target acquisition state, etc.) to generate a transformation (e.g., matrix, function, etc.) that correlates pixel coordinates of an image with geographic coordinates and sends the generated transformation to a satellite 110a in space.

Satellite 110a may capture an image of a target acquisition area defined by the acquisition context, detect features in the captured image locally on satellite 110a using feature detection techniques, filter, and process the detected features to remove noise and aggregate similar detected features, determine geolocation for the detected features by applying the transformation to the pixel coordinates of the detected features, and generate embeddings for the detected features using a neural network model received from the MOC 120. In some embodiments, the neural network model used for generating embeddings may be trained by the MOC 120 using a dataset of ground and satellite images. Satellite 110a may transmit the embeddings and geolocation data to the MOC 120.

The MOC 120 may receive the embeddings and geolocation data from satellite 110a, determine geographic coordinates for the detected features based on the received embeddings and geolocation data, and send the geographic coordinates to an external system 160. In some embodiments, the MOC 120 may trigger an action by the external system 160 (e.g., uses the geographic coordinates, etc.) in response to detecting a significant feature. Examples of such actions include issuing an alert, activating a monitoring system, dispatching an emergency response team, deploying a surveillance drone, and activating a monitoring system.

In some embodiments, the MOC 120 may be configured to divide the acquisition context into smaller tiles for processing and generate ground tile embeddings for each tile using the neural network model. In some embodiments, the MOC 120 may be configured to generate a global mapping between satellite tile embeddings and ground tile embeddings and determine the geolocation of each detected feature based on the global mapping.

In some embodiments, the follow-on satellite 110b may receive the detected features and geolocation data from satellite 110a and generate an acquisition context based on the received detected features and geolocation data.

In some embodiments, the follow-on satellite 110b may capture an additional image of the target acquisition area based on the acquisition context generated by the follow-on satellite and perform feature detection techniques to detect features in the additional image locally on the follow-on satellite 110b. In some embodiments, performing the feature detection techniques may include applying an edge detection algorithm, AI model, or machine learning technique to the captured image to identify objects within the image.

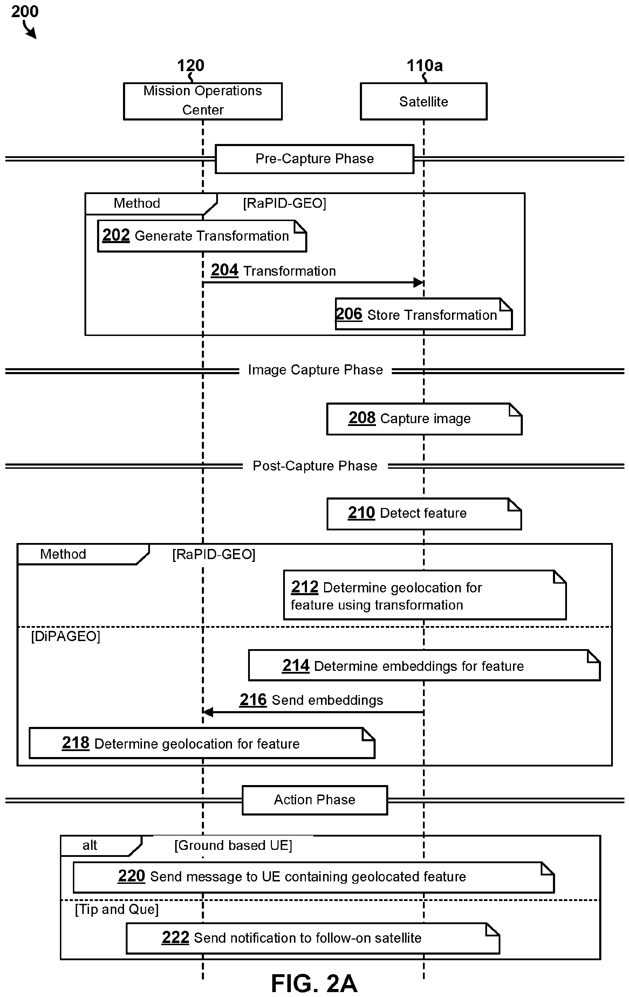

FIGs. 2A-2D are activity diagrams illustrating methods 200, 230, 260 of performing geolocating and georeferencing operations in accordance with some embodiments.

With reference to FIG. 2A, operations 202-206 and 212 may be performed if the RaPID-GEO method is being used, operations 214-218 may be performed if the DiPAGEO method is being used, and all other operations may be performed regardless of which method is used.

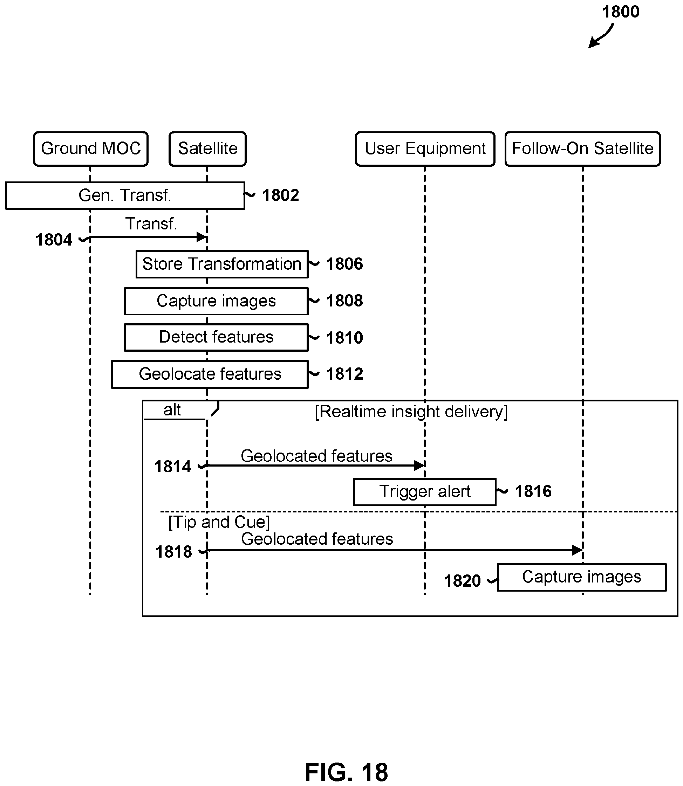

In operation 202, the MOC 120 may generate a transformation. In operation 204, the MOC 120 may send the transformation to satellite 110a. In operation 206, satellite 110a may store the transformation for later use. Operations 202-206 will be described in further detail with reference to FIGs. 18-19.

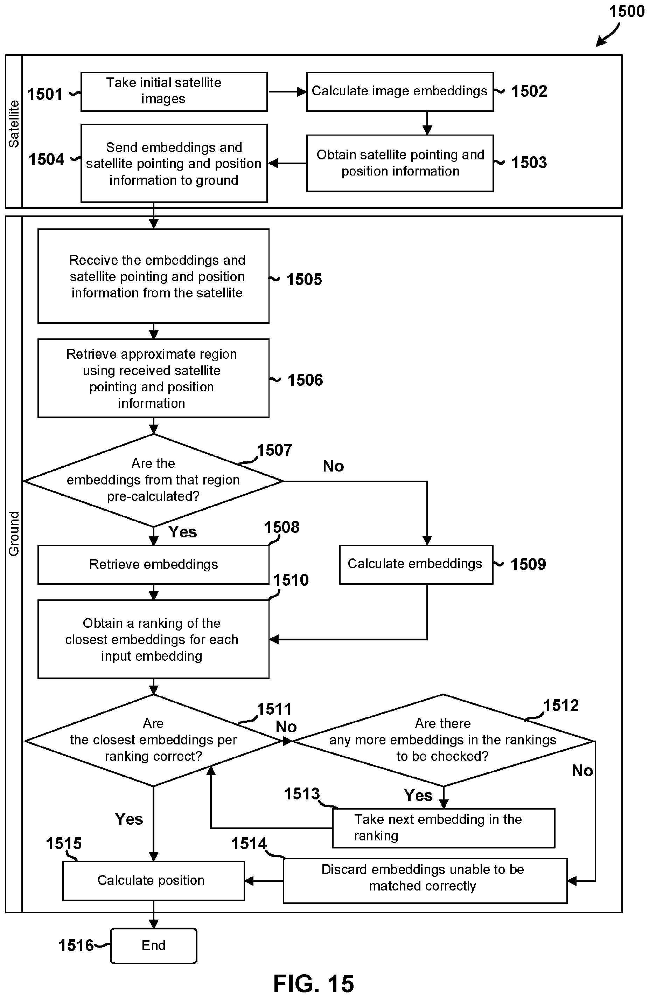

In operation 208 satellite 110a (e.g., a satellite) may capture at least one image. In operation 210 satellite 110a may detect features in the captured image. Operations 208-210 will be described in further detail with reference to FIGs. 15-16, 18, and 20.

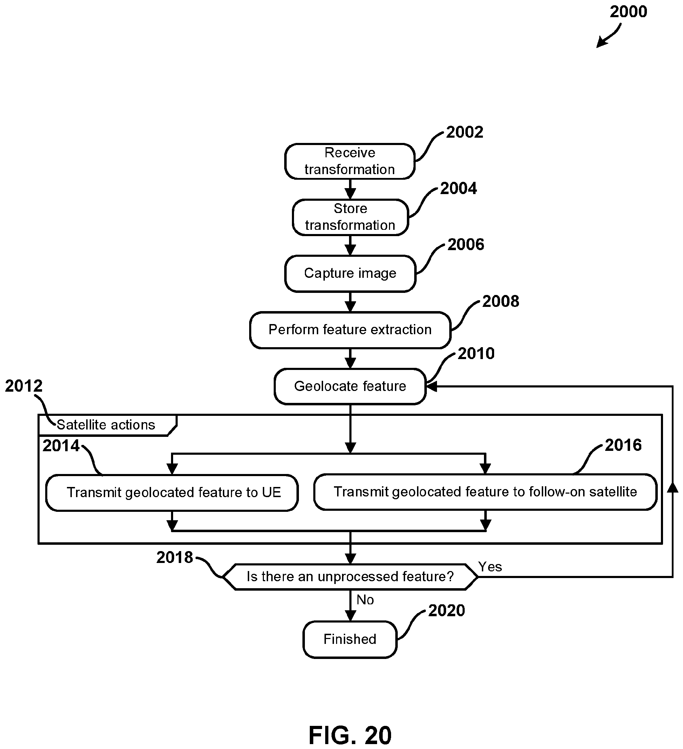

In operation 212, the satellite may determine the geolocation for the feature using the transformation. Operation 212 will be described in further detail with reference to FIGs. 18 and 20.

In operation 214, the satellite may determine embeddings for the feature. In operation 216, the satellite may send the embeddings to the MOC 120. In operation 218, the MOC 120 may determine the geolocation for the feature using the embeddings. Operations 214-218 will be described in further detail with reference to FIGs. 15-17.

In operation 220, a message may be sent to a ground-based UE, including the geolocated feature. If the RaPID-GEO method is being used, then operation 220 may be performed by satellite 110a. If the DiPAGEO method is being used, then operation 220 may be performed by the MOC 120.

In operation 222, a "tip and cue" message may be sent to a follow-on satellite 110a (e.g., edge device), including the geolocated feature. If the RaPID-GEO method is being used, then operation 222 may be performed by satellite 110a. If the DiPAGEO method is being used, then operation 222 may be performed by the MOC 120.

In an embodiment, operations 220, 222, and/or other actions may be performed in parallel or sequentially. Operations 208-222 may repeat for each image that is captured by satellite 110a. For RaPID-GEO, operations 202 to 206 may also be repeated for each captured image (e.g., because each image covers a different geographic area). Before capturing each image, the acquisition context, transformation, and relevant parameters (such as the geographic location, satellite orientation, environmental conditions, etc.) may be re-assessed or recalculated to ensure that the correct contextual and transformation data are applied to the specific area being imaged. As such, in some embodiments, operations 202-222 may be repeated for each captured image to account for the varying geographic areas of interest.

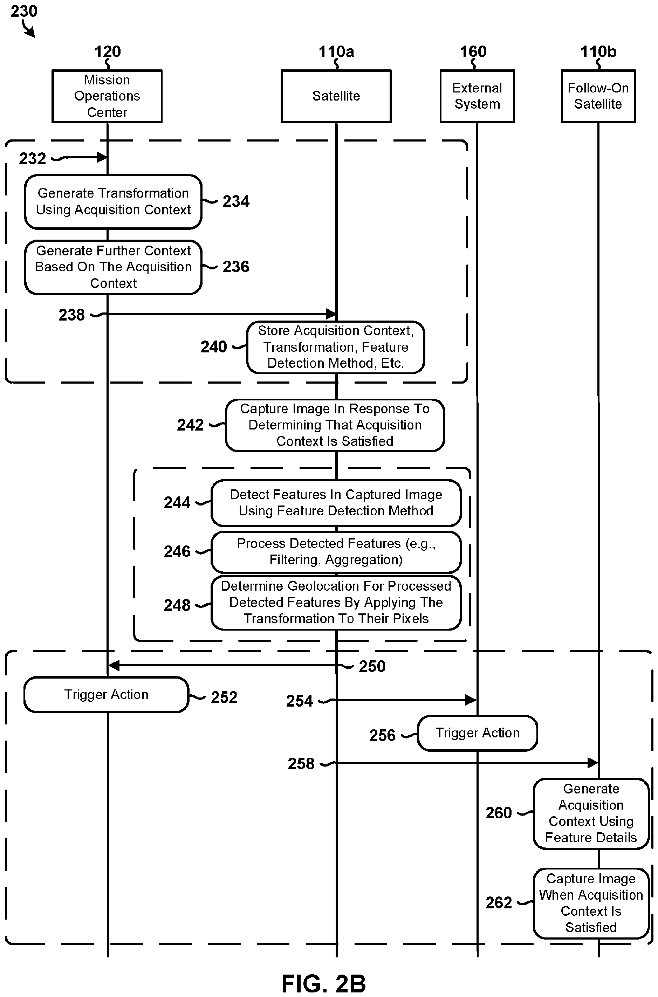

With reference to FIG. 2B, in operation 232, the MOC 120 may receive or determine an acquisition context, which may include identifying a geographic region of interest for monitoring and image capture, such as an area prone to wildfires. For RaPID-GEO, the geographic region may specifically refer to the area that will be captured in the image, which may be used for generating the transformation in operation 236 that maps pixel coordinates in the captured image to corresponding geographic coordinates. The acquisition context may further define various parameters such as the geographic location, satellite orientation, timing for image capture, expected lighting conditions, and environmental factors such as weather patterns. The acquisition context may also define the features of interest, such as wildfires, ships, or buildings, depending on monitoring objectives.

In operation block 234, the MOC 120 may generate a transformation based on the acquisition context. For example, the MOC 120 may generate a transformation that maps the pixel grid of the captured image to corresponding geographic coordinates. Said another way, the MOC 120 may generate a transformation that maps pixel coordinates in the captured image to corresponding geographic coordinates. In some embodiments, the transformation may be a matrix that defines the relationship between pixel coordinates and geographic coordinates. In some embodiments, the transformation may be a function that uses some or all of satellite orientation, environmental data, and/or pixel data to compute geographic locations. This transformation may be used for more accurate geolocation of image features and to allow for precise mapping of image content, such as wildfire regions, to real-world locations.

In operation block 236, the MOC 120 may generate further context based on the acquisition context. For example, the MOC 120 may establish environmental and operational parameters, including the satellite's position, orientation, velocity, expected atmospheric conditions (e.g., wind, humidity), and lighting conditions at the time of image capture, any or all of which may affect the accuracy of image processing. In some embodiments, the MOC 120 may generate or update the acquisition context based on an acquisition target area or real-time data from the satellite or external environmental sources. In some embodiments, in operation block 236, the MOC 120 may determine the satellite commands to capture images of the selected region. These commands may include satellite positioning, sensor configurations, and specific image capture instructions.

In operation 238, the MOC 120 may send to satellite 110a information identifying the acquisition context, transformation, and/or the feature detection method. For example, the MOC 120 may send information such as the geographic coordinates of the target area, the transformation details (e.g., matrix or function, etc.), and relevant environmental factors (e.g. lighting, weather, etc.) that may influence image capture. If multiple feature detection methods are available on satellite 110a, the MOC 120 may send a reference to a specific detection method, which may include a classical algorithm (e.g., thresholding or band ratio analysis) or a neural network for feature detection. The feature detection method may also be a combination of techniques, such as a neural network combined with post-processing methods to refine detected features, or may include multiple neural networks. In some embodiments, the data transmitted in operation 238 may be encapsulated in a JSON object.

In operation block 240, satellite 110a may receive and store the transmitted data, which may include acquisition context, transformation, and/or a feature detection method (if it was provided). This information may be stored in the satellite's onboard memory for use during subsequent image capture and processing. As discussed, the feature detection method stored on satellite 110a may range from classical algorithms to neural networks or may reference a method already present on the satellite. In some embodiments, the feature detection method may include a combination of techniques, such as a neural network with post-processing.

In operation block 242, satellite 110a may capture one or more images in response to determining that acquisition context is satisfied. For example, satellite 110a may verify that it has reached the appropriate geographic location, is oriented correctly, and that the environmental conditions (e.g., lighting and weather) match the parameters defined in the acquisition context. In response to verifying these conditions, satellite 110a may activate its imaging system to capture high-resolution images of the target area. In some embodiments, satellite 110a may divide the captured images into smaller segments or tiles. Metadata such as timestamps, geographic coordinates, measured satellite orientation, and sensor settings may also be captured alongside the images for subsequent use in the image processing and geolocation stages.

In operation block 244, satellite 110a may detect features in the captured images. In some embodiments, the satellite 110a may use the feature detection method to detect features in the captured images. As discussed, a feature detection method may include, for example, classical vision algorithms (e.g., thresholding, band ratio analysis, etc.), neural networks (e.g., segmentation networks, etc.), multiple of either, or any combination thereof. For example, if satellite 110a uses a neural network for wildfire detection, the network may identify pixels representing active fire regions in the image. In other cases, satellite 110a may detect multiple features within the same image, each associated with a specific type, such as submarines, aircraft carriers, or buildings. The satellite may classify and associate each feature with its respective type based on predefined classification criteria. In some embodiments, the feature detection may include segmentation.

In operation block 246, satellite 110a may process the detected features by filtering out noise, clustering contiguous features (e.g., grouping fire pixels), and identifying key characteristics such as centroids or boundaries of feature clusters. For example, in wildfire detection, contiguous pixels representing fire regions may be grouped into clusters, and the boundaries of each fire cluster may be identified for further analysis.

In operation block 248, satellite 110a may determine geolocation for the processed detected features by applying the transformation to their pixels (e.g., to the pixel coordinates of the wildfire clusters, etc.). These operations may convert the detected pixels into geographic coordinates, such as latitude and longitude, to pinpoint the exact location of the feature. For example, in some embodiments, satellite 110a may map the pixel coordinates of a wildfire cluster to real-world geographic coordinates using the transformation received from the MOC.

In operation 250, satellite 110a may send the geolocated features and associated metadata, such as the area of each fire cluster and probability estimates, via low bandwidth links, such as inter-satellite links (ISL). ISL may include compact data packets that allow for near-real-time transmission of information. The low bandwidth links may also be other types of always-available links. Further examples of low bandwidth links include radio frequency (RF) links, low Earth orbit (LEO) satellite communication links, and ground-based microwave links.

In operation block 252, the MOC 120 may trigger an action based on the received geolocation data. For example, the MOC 120 may send an alert to fire services or emergency response teams near the detected wildfire location to allow for rapid deployment of firefighting resources. This alert may include geolocation information and feature data that allow for a quick and targeted response.

In operation 254, satellite 110a may send geolocated data to an external system, such as emergency response teams or automated firefighting drones, which may use the data for advanced analysis or real-time intervention. For example, firefighting drones may use the geolocation data to reach and suppress the fire or capture additional high-resolution images for further analysis. In some embodiments, sending the geolocated data to the external system may cause that system to perform an action.

In operation block 256, the external system 160 may trigger an action. For example, the external system 160 may generate automated response based on the received data. For example, the system may dispatch firefighting drones or activate other emergency response mechanisms based on the geolocated wildfire data. These systems may use the transmitted geolocation and metadata to perform actions such as fire suppression or high-resolution monitoring.

In operation 258, satellite 110a may send data (e.g., geolocation and wildfire information, etc.) to a follow-on satellite 110b. The follow-on satellite may use this data to plan its next image capture of the region, or to prioritize its image captures.

In operation block 260, the follow-on satellite 110b may generate an acquisition context using the geolocated data from satellite 110a. The acquisition context may include information for scheduling the next image capture, adjusting satellite orientation, or configuring additional sensors for continued monitoring of the wildfire's progression.

In operation block 262, the follow-on satellite 110b may capture an image in response to determining that the acquisition context is satisfied. For example, the follow-on satellite 110b may capture an image of a wildfire after confirming that the satellite has reached the designated location, and the environmental conditions are adequate. In addition to capturing visual imagery, the follow-on satellite 110b may use a dedicated thermal sensor to acquire data on the temperature, or use other remote sensing to determine wind conditions, at the wildfire location. This image and associated sensor data may provide updated information on the status of the wildfire, including its expansion and environmental factors influencing its spread. In some embodiments, satellite 110a may be configured to perform one or more of the operations 250, 254, and 258, such as transmitting the captured data to the centralized site, triggering an automated response, and/or sharing information with external systems for further action.

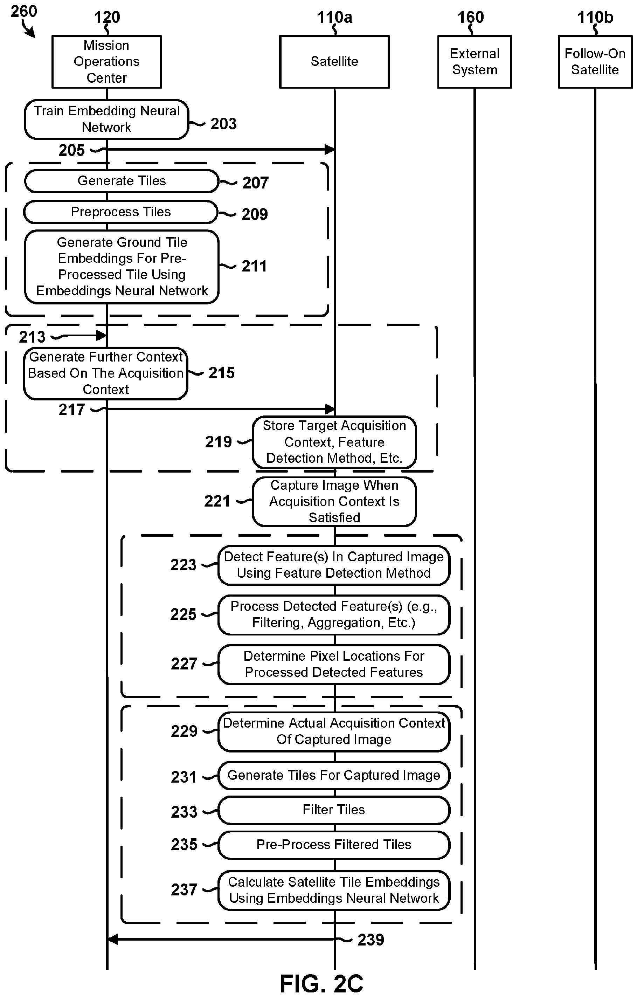

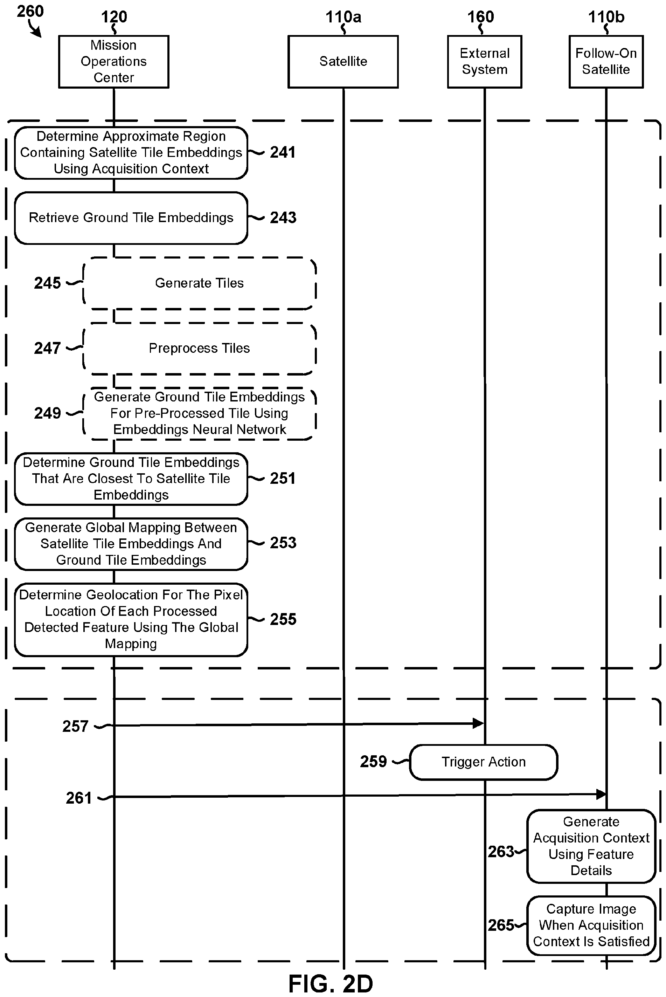

With reference to FIGs. 2C and 2D, in operation block 203, the MOC 120 may train an embedding neural network tailored for Earth Observation (EO) imagery to generate feature-rich embeddings that facilitate geolocation tasks. For example, the neural network may be trained on datasets of ground and satellite images to recognize patterns and generate embeddings for image tiles that encapsulate key geographic features. This training may focus on configuring the network to extract meaningful insights for specific applications such as wildfire detection.

In operation 205, the MOC 120 may send data to satellite 110a, which may include uploading the trained neural network to the satellite. For example, the MOC 120 may transmit the trained neural network model and other relevant data, such as feature detection methods or acquisition context, to be used by satellite 110a during image capture and processing. This transfer may allow the satellite to apply the neural network during subsequent image capture and processing operations. In some embodiments, the MOC 120 may also upload feature detection methods and the acquisition context needed for onboard processing in operation 205.

In operation block 207, the MOC 120 may generate tiles. For example, the MOC 120 may divide a large acquisition context into smaller image tiles, each of which may be processed individually for easier and more precise analysis. In some embodiment, in operation block 207, the MOC 120 may select a geographic region of interest known for wildfire activity (potentially spanning thousands of square kilometers). The MOC 120 may tile historical EO image data of this region into smaller image patches. These image patches may include precise geolocation information that could be used as reference data. The generated tiles may or may not be overlapping in nature.

In operation block 209, the MOC 120 may preprocess each image tile. Preprocessing may include making adjustments such as image normalization or contrast enhancement to ensure the tiles conform to the input requirements of the neural network to prepare them for generating embeddings.

In operation block 211, the MOC 120 may generate ground tile embeddings for pre-processed tiles using an embeddings neural network. For example, the MOC 120 may apply the trained neural network to each tile to generate a unique embedding that encapsulates the important features of the tile. In some embodiments, in operation block 211, the MOC 120 may apply the trained neural network to each preprocessed tile to generate an embedding. Each generated embedding may represent significant features of the tile and may be linked to its geolocation.

In operation 213, the MOC 120 may receive data from external systems or satellites related to the image acquisition context. For example, the MOC 120 may receive information about the satellite's current position, lighting conditions, or any relevant environmental factors that may affect image capture. In some embodiments, in operation 213, the MOC 120 may select a specific geographic area of interest for real-time wildfire monitoring. The selected area may be based on current environmental conditions, fire risk assessments, or other strategic priorities.

In operation 215, the MOC 120 may generate further context using acquisition context. For example, the MOC 120 may define specific parameters, such as a suitable satellite position or time of day to capture high-quality images of the designated area. In some embodiments, in operation 215, the MOC 120 may determine the satellite commands to capture images of the selected region. These commands may include satellite positioning, sensor configurations, and specific image capture instructions.

In operation 217, the MOC 120 may send data to satellite 110a. For example, the MOC 120 may send the acquisition context and the associated context information to the satellite and/or otherwise send instruction regarding when and where to capture images. In some embodiments, in operation 217, the MOC 120 may uplink the feature detection method, such as a wildfire detection neural network, to satellite 110a (e.g., in response to determining that the satellite does not include the relevant detection method, etc.).

In operation block 219, satellite 110a may store target acquisition context, feature detection method, etc. For example, satellite 110a may store these instructions in its onboard memory for reference during subsequent image capture operations. In some embodiments, in operation block 219, satellite 110a may store the target acquisition context, feature detection method, and other relevant data in its onboard memory so that they are ready for use during image capture.

In operation block 221, satellite 110a may capture an image when the acquisition context is satisfied. For example, satellite 110a may take a picture of the target area once it reaches the specified position in its orbit. In some embodiments, in operation block 221, satellite 110a may capture an image once it reaches the specified position or orientation in its orbit as dictated by the acquisition context. The image may cover the designated region of interest.

In operation block 223, satellite 110a may detect feature(s) in captured image using a feature detection method. As discussed, a feature detection method may include, for example, classical vision algorithms (e.g., thresholding, band ratio analysis, etc.), neural networks (e.g., segmentation networks, etc.), multiple of these, or any combination thereof. For example, if satellite 110a uses a neural network for wildfire detection, the network may identify pixels representing active fire regions in the image. In other cases, satellite 110a may detect multiple features within the same image, each associated with a specific type, such as submarines, aircraft carriers, or buildings. The satellite may classify and associate each feature with its respective type based on predefined classification criteria. Feature detection may also include feature segmentation. In some embodiments, in operation block 223, satellite 110a may apply pre-programmed algorithms to identify key objects within the image, such as buildings, vehicles, or natural landmarks. In some embodiments, in operation block 223, satellite 110a may apply the onboard wildfire detection neural network to the captured image. The network may extract all pixels that represent potential wildfire activity based on the model's training.

In operation block 225, satellite 110a may process detected feature(s) (e.g., filtering, aggregation, etc.). For example, satellite 110a may filter out irrelevant data and aggregate similar features to simplify the analysis and reduce noise, redundancy, etc. In some embodiments, in operation block 225, satellite 110a may process the segmented wildfire pixels by clustering them, removing outliers, and identifying key features such as the centroid or outer bounds of each wildfire cluster. Filtering based on thresholds may be applied to increase confidence in the detected features.

In operation block 227, satellite 110a may determine pixel locations for processed detected features. For example, satellite 110a may calculate the exact pixel coordinates of each feature within the image for further geolocation processing. In some embodiments, in operation block 227, satellite 110a may store the pixel locations of the wildfire clusters, such as centroids or boundaries, for further geolocation analysis.

In operation block 229, satellite 110a may determine the actual acquisition context of the captured image. For example, satellite 110a may analyze the image's metadata, such as the time of capture and environmental conditions, to verify that it is consistent with or adequately aligns with the acquisition context parameters. In some embodiments, in operation block 229, satellite 110a may select the image with detected wildfires and prepare it for detailed analysis. In some embodiments, these operations may include identifying the specific tiles that contain wildfire activity.

In operation block 231, satellite 110a may generate tiles for the captured image. For example, satellite 110a may divide the captured image into smaller tiles to allow for more detailed analysis. In some embodiments, in operation block 231, satellite 110a may divide the image into smaller tiles for more granular analysis of wildfire clusters. The generated tiles may or may not be overlapping in nature.

In operation block 233, satellite 110a may filter tiles. For example, satellite 110a may remove tiles that contain irrelevant information or poor-quality data so that the system may focus on tiles that include the most useful or significant image features. In some embodiments, in operation block 233, satellite 110a may select tiles that are rich in information or are spatially distributed around detected wildfire clusters for comprehensive coverage of the fire region.

In operation block 235, satellite 110a may pre-process filtered tiles. For example, satellite 110a may enhance the remaining tiles by adjusting contrast, removing noise, and correcting other image artifacts. In some embodiments, in operation block 235, satellite 110a may preprocess the selected tiles for consistency with the trained embedding-generation neural network's input requirements, such as adjusting image contrast or removing noise.

In some embodiments, in operation block 237, satellite 110a may calculate satellite tile embeddings using the embeddings neural network. For example, satellite 110a may use the neural network model it received from the MOC 120 to generate embeddings for each tile that represent or characterize the important image features detected in each image section. In some embodiments, in operation block 237, satellite 110a may calculate embeddings for each tile using the neural network received from the MOC 120. These embeddings may encapsulate the key geographic features of the detected wildfire clusters.

In operation 239, satellite 110a may downlink the calculated satellite tile embeddings, associated metadata, and feature details for each processed detected feature (e.g., timestamp, type, pixel location, probability, area, maximum internal dimension) from step 227 to the MOC 120 for further analysis. In some embodiments, the feature details may include the estimated size of each wildfire cluster and probability metrics,.

In operation block 241, the MOC 120 may determine the approximate region containing satellite tile embeddings using acquisition context. For example, the MOC 120 may analyze the tile embeddings in combination with the acquisition context to determine or estimate the region of the target area represented by the tiles. In some embodiments, in operation block 241, the MOC 120 may use the acquisition context to determine the approximate geographic region containing the satellite tile embeddings. This approximate region may help narrow the search space or the area for further geolocation operations.

In operation block 243, the MOC 120 may retrieve ground tile embeddings. For example, the MOC 120 may access its database of pre-generated ground tile embeddings (e.g., as generated in operations 207-211) to compare with the satellite data. In some embodiments, in operation block 243, the MOC 120 may retrieve pre-generated ground tile embeddings that correspond to the approximate region identified using the acquisition context. These ground embeddings may include reference data for comparison with the satellite embeddings.

In operation block 245, the MOC 120 may generate tiles (e.g., if unable to retrieve them in operation 243). For example, if necessary, the MOC 120 may create additional ground tiles for areas not previously processed to allow for full coverage. In some embodiments, in operation block 245, the MOC 120 may generate additional ground tiles in response to determining that the region includes areas that were not previously processed. The generated tiles may or may not be overlapping in nature.

In operation block 247, the MOC 120 may preprocess tiles. For example, the MOC 120 may apply the same preprocessing steps to these ground tiles that were applied to the satellite tiles, such as enhancing image quality and removing noise. In some embodiments, in operation block 247, the MOC 120 may preprocess the newly generated ground tiles and apply the same preprocessing techniques used for the satellite tiles, such as image normalization and artifact removal.

In operation block 249, the MOC 120 may generate ground tile embeddings for pre-processed tiles using an embeddings neural network. For example, the MOC 120 may apply its neural network model to each preprocessed ground tile to generate embeddings that may be compared to information or embeddings received from the satellites. In some embodiments, in operation block 249, the MOC 120 may apply the trained neural network to generate embeddings for each preprocessed ground tile. These ground tile embeddings may be used for matching with the satellite tile embeddings.

In operation block 251, the MOC 120 may determine ground tile embeddings that are closest to satellite tile embeddings. For example, the MOC 120 may compare the satellite embeddings with the ground embeddings to find the most similar representations and/or to otherwise determine whether both tiles are associated with the same location. In some embodiments, in operation block 251, the MOC 120 may compare the satellite tile embeddings with the ground tile embeddings to identify the most similar pairs. These matching operations may help correlate the satellite data with ground reference data.

In operation block 253, the MOC 120 may generate a global mapping between satellite tile embeddings and ground tile embeddings. For example, the MOC 120 may create a map that correlates the satellite's image data with the known geographic features in the ground tiles. In some embodiments, in operation block 253, the MOC 120 may calculate a transformation between the satellite and ground tile embeddings. The MOC 120 may map the satellite's pixel coordinates to corresponding geographic locations. In some embodiments, the MOC 120 may use the inverse of this transformation to convert georeferenced positions to satellite pixel coordinates.

In operation block 255, the MOC 120 may determine geolocation for the pixel location of each processed detected feature using the global mapping. For example, the MOC 120 may apply the global map to the pixel locations of detected features to calculate their exact geographic coordinates. In some embodiments, in operation block 255, the MOC 120 may apply the transformation to the wildfire pixel locations detected by the satellite to determine the precise geolocation of each wildfire cluster.

In operation 257, the MOC 120 may send data to the external system 160. For example, the MOC 120 may transmit the calculated geolocations and related feature data to an external system for further analysis or real-time decision-making. In some embodiments, in operation 257, the MOC 120 may send the calculated geolocations and relevant metadata, such as cluster size and confidence metrics, to an external system, for further analysis or real-time decision-making.

In operation block 259, the external system 160 may trigger an action. For example, the external system 160 may use the received geolocation data to initiate actions such as dispatching emergency response teams or activating surveillance systems. In some embodiments, in operation block 259, the external system 160 may trigger an action, such as dispatching emergency services or deploying firefighting drones to the wildfire's location based on the received geolocation data.

In operation 261, the MOC 120 may send data to the follow-on satellite 110b. For example, the MOC 120 may provide the follow-on satellite 110b with detailed information about detected features and/or instructions to capture more detailed images of the same area. In some embodiments, in operation 261, the MOC 120 may send geolocation data and metadata to a follow-on satellite 110b. In some embodiments, the MOC 120 may instruct the follow-on satellite 110b to capture additional images or perform further monitoring of the wildfire (e.g., may generate an associated acquisition context and send it to the follow-on satellite).

In operation block 263, the follow-on satellite 110b may generate acquisition context using feature details. For example, the follow-on satellite 110b may adjust its imaging parameters based on the feature details. In some embodiments, in operation block 263, the follow-on satellite 110b may generate a new acquisition context using the feature details provided by the MOC 120. This new context may improve or augment the follow-on satellite's imaging parameters for capturing updated information. The follow-on satellite may also use the acquisition context shared in operation 261.

In operation block 265, the follow-on satellite 110b may capture an image when the acquisition context is satisfied. For example, the follow-on satellite 110b may take a new image once it reaches the correct position or lighting conditions. In some embodiments, in operation block 265, the follow-on satellite 110b may capture an image of the wildfire in response to determining that the acquisition context is satisfied. The captured images may provide additional temporal or environmental data, such as temperature or wind conditions, to support ongoing wildfire monitoring. It may also use different remote sensing modalities to those used by satellite 110a.

The DiPAGEO method performs georeferencing tasks based on image matching using a neural network. The main aim of the system is that, given a satellite image, it is able to provide reference coordinates for the region depicted. Neural networks are inherently able to determine relevant features from within an image (without necessarily requiring feature engineering), allowing it to obtain a measure of distance between the codification of two different images by comparing their feature descriptors (e.g., embeddings). The objective behind the proposed method is to be able to perform geolocation for features in an image by comparing a captured image, or a set of them, with a reference image (that is itself already georeferenced).

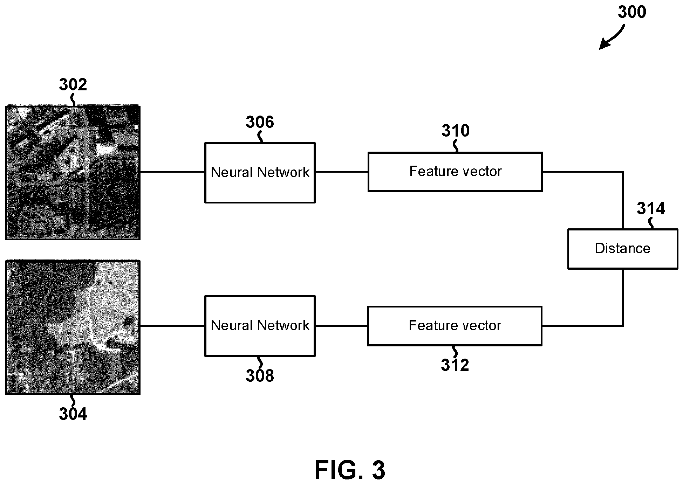

Within the topology of neural network models the Siamese Neural Network (SNN) is a model type that is able to provide a measure of the similarity between images. These neural networks are capable of producing an embedding given an input image, an embedding being a mathematical information structure, commonly a vector, which is the codification of the most relevant information of an image into a latent space. Neural network model training is crucial for this purpose, as it lets the model know how to detect an image's most important features (e.g., for the purpose of image matching). Codifying the images allows the system to establish a metric to measure how close (similar) two different images are (see FIG. 3), as well as providing other benefits disclosed throughout the specification.

FIG. 3 illustrates components in a computing system 300 that could be configured to perform DiPAGEO operations in accordance with some embodiments. For example, the system 300 illustrated in FIG. 3 may be configured to use neural networks to perform georeferencing tasks based on the similarity of features between a captured image 302 and a reference image 304. The neural networks 306 and 308 (e.g., SNN, etc.) may encode both the captured and reference images into feature vectors 310, 312 or embeddings, which, as discussed, may be vector-based representations of the most relevant image features. The processing system may compare the feature vectors 310, 312 or embeddings to calculate a distance 314 or similarity score that quantifies how closely the images match based on shared feature descriptors.

The DiPAGEO operations may begin with an edge device (e.g., satellite 110, etc.) capturing an image of a target region and dividing the image into multiple tiles. Each tile may be processed by the pre-trained embeddings neural network, which may generate an embedding that encapsulates the relevant features of that tile. The processing system may compare these embeddings to reference embeddings retrieved from a database that correspond to previously captured and georeferenced images.

As discussed, the embeddings may be stored as continuous high-dimensional vectors that represent the features of each image tile, such as geographic elements like rivers, buildings, or terrain. The system may calculate the distance between the embeddings using a similarity metric, such as cosine similarity or Euclidean distance, to determine how closely the features in the captured image align with those in the reference image. The processing system may indicate that the tiles with the highest similarity scores are more likely to depict the same geographic features in both images.

Using the matched tiles, the processing system may georeference the captured image by correlating the pixel coordinates of the matched tiles with the known geographic coordinates of the reference image. This process may allow the system to accurately determine the geolocation of features in the captured image. The system may further refine the geolocation using metadata, such as GSD and satellite orientation data.

The DiPAGEO operations may be performed fully onboard the edge device (e.g., satellite 110, etc.) or in conjunction with a centralized site (e.g., MOC 120, etc.). In a fully onboard implementation, the edge device may perform all georeferencing tasks without transmitting large volumes of image data to the centralized site. In a hybrid implementation, the edge device may perform the initial georeferencing and embedding generation, and the MOC may perform the final geolocation using its robust computational resources and reference data. This flexible approach may allow the system to balance various trade-offs (e.g., between efficiency and accuracy, etc.) based on available resources and operational requirements. Such georeferencing operations may reduce bandwidth usage, conserve power, and accelerate decision-making, making it particularly valuable in time-sensitive applications such as environmental monitoring, emergency response, surveillance, or any other system in which rapid geolocation is beneficial (e.g., for timely action, etc.).

An important objective of the DiPAGEO operations is to retrieve a set of geographic coordinates for an image patch from an image captured onboard a satellite for any region of the Earth. It is important to pre-train the neural network model and optionally perform an initialization on the ground.

In some embodiments, the DiPAGEO operations may include retrieving the geographic coordinates of an image patch from a satellite-captured image of a region on Earth. In some embodiments, the neural network model may be pre-trained using a dataset that includes a variety of georeferenced images. In some embodiments, the processing system may perform an initialization phase on the ground so that the model is more accurately calibrated before deployment. These initialization operations may improve the accuracy and reliability of the georeferencing operations after the system is deployed in orbit. These operations are explained in more detail further below.

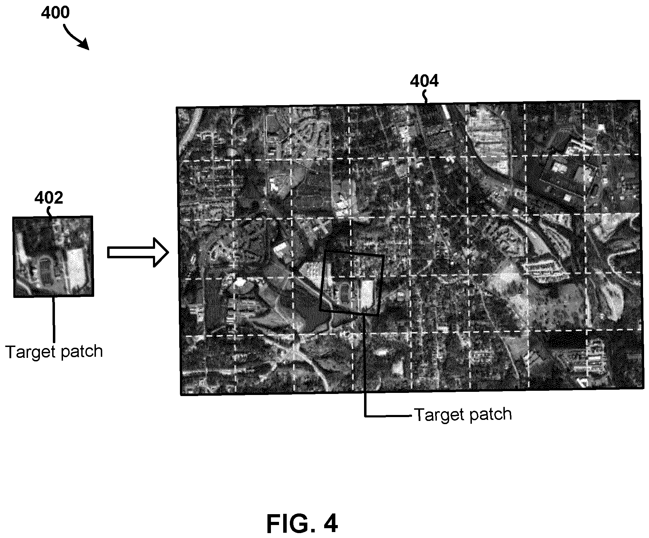

One of the major obstacles in this procedure is the noise in satellite imagery, which could be due to the presence of clouds, the inclination of the satellite itself (varying the off-nadir angle), satellite instability during image capture, imperfections in the imaging system, sensor noise, or other artifacts affecting the quality of the image obtained. The other notable problem lies in the technique used to match the image patch of interest to the reference images, as in real imagery, there may most likely be shifts or small rotations relative to the orthogonal axes of the reference image (see FIG. 4). In some embodiments, the processing system may be configured to train a neural network model to be robust enough to these variations between image patch and reference images.

FIG. 4 illustrates a system 400 in which a target patch 402 is extracted from a larger satellite image 404 (e.g., as part of the DiPAGEO georeferencing operations, etc.) in accordance with some embodiments. The target patch 402 may represent a smaller region within the larger image 404, which the processing system may identify and analyse using a neural network (e.g., SNN, etc.). The processing system may divide a satellite-captured image into multiple tiles, such as the target patch 402, and compare these tiles to reference images. The neural network may encode both the captured and reference images into embeddings and calculate the similarity between the embeddings of the target patch and the reference tiles to geolocate the region of interest within the broader geographic context (e.g., the larger reference image 404). These operations may be used to accurately determine the geographic coordinates of features within the target patch 402 despite potential distortions like shifts or rotations between the captured and reference images.

The DiPAGEO operations may focus on addressing one of the problems inherent to EO CubeSats in particular - that of only a limited bandwidth communications channel being available between the satellite and the ground. This limited bandwidth often restricts the ability to transmit the complete raw image to the ground and/or restricts the ability to send this data in real time. By providing an alternative solution to sending whole images by codifying them into embeddings directly onboard the satellite, where the embeddings are much smaller than the raw image, the various embodiments may deliver the embeddings to Earth along with other metadata to enable localization of the desired image/feature. Transferring the images from the satellite to the ground requires the downlink of a relatively large amount of two-dimensional data. In contrast, calculating the embeddings on the satellite and downlinking them may significantly reduce the downlink bandwidth requirements. For example, in the case where the satellite has an always-on or always-available connection to ground (which typically has very limited bandwidth in the order of bytes/second), the described operations may facilitate the sending of one or more embeddings to improve the accuracy of the coordinates obtained at the very end of the system stages, providing low-latency geolocation of features.

In some embodiments, the processing system may be configured to address bandwidth limitations inherent to EO CubeSats by minimizing or reducing the amount of data transmitted from the satellite to the ground. The limited bandwidth available for communication may restrict the transmission of full-resolution images or real-time data transfer. In some embodiments, the processing system may codify captured images directly onboard the satellite into embeddings that are significantly smaller than the raw image data. The processing system may downlink the embeddings along with other metadata for accurate geolocation of features within the image. By calculating the embeddings onboard the satellite and transmitting the embeddings instead of the full image, the processing system may reduce the amount of data required for downlink, conserving bandwidth. This may be particularly useful in scenarios in which the satellite has a limited or always-on low-bandwidth connection to the ground.

The method may include three processing stages: (1) training and reference set development, (2) edge processing, and (3) matching and localization. Step 1 trains the neural network for effectively extracting appropriate feature vectors/embeddings in the latent space. Step 2 applies the neural network to captured images to produce the embeddings and metadata. Step 3 matches the embeddings to reference images using the feature vectors and the metadata.

In some embodiments, the processing system may be configured to implement three distinct stages: (1) training and reference set development, (2) edge processing, and (3) matching and localization. In some embodiments, the processing system may begin by training a neural network in the first stage to extract relevant feature vectors, or embeddings, within the latent space. In some embodiments, the first stage may include developing a reference set of georeferenced images that the system will use for comparison during later stages. In the second stage, the processing system may apply the trained neural network to capture images onboard the edge device, generating embeddings and associated metadata for each image tile. In the third stage, the processing system may match the generated embeddings to the reference images by comparing feature vectors and using the associated metadata. These matching operations may allow the processing system to localize the captured images and determine the geolocation of features with a high level of accuracy.

Prior to the georeferencing process runtime, the neural network model may need to be trained, which may require a specific training strategy. Optionally a ground embedding database may be developed to speed up the runtime element of the georeferencing method.

In some embodiments, the processing system may train the neural network model before georeferencing and/or may develop or use a ground embedding database to accelerate runtime georeferencing operations.

Neural network model training may be done in several ways, depending on the main problem to address or the types of distortions present in the images (shifts, rotations, off-nadir angles, etc). This may heavily influence the approach taken when selecting the images to train the neural network model or how data augmentation may be used to pursue this objective.

In some embodiments, the processing system may be configured to select and/or tailor the neural network training operations based on image distortions such as shifts, rotations, and off-nadir angles. In some embodiments, the processing system may be configured to select and implement a training approach based on the specific distortions present in the images.

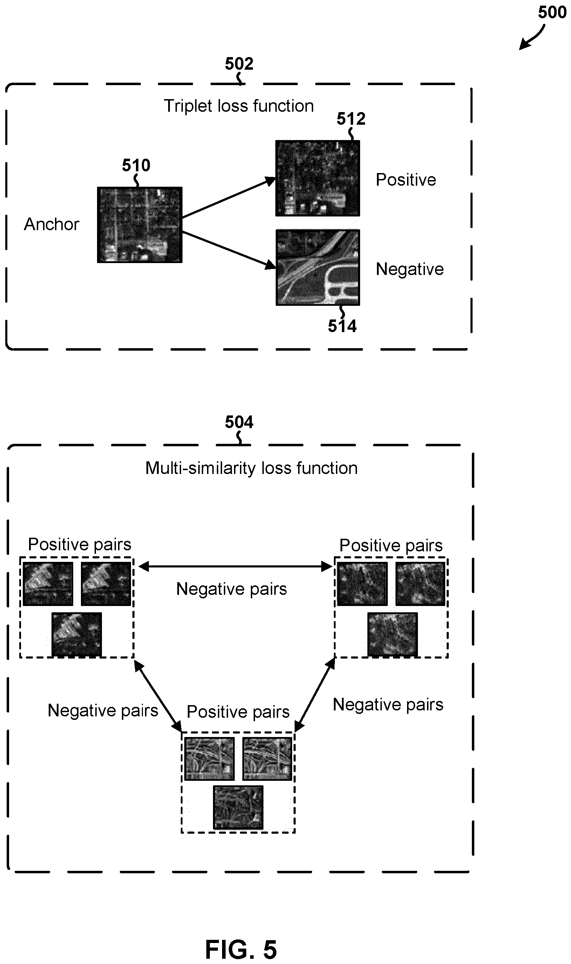

FIG. 5 illustrates a computing system 500 that could be configured to use different types of loss functions in training the neural network for georeferencing tasks in accordance with some embodiments. The example illustrated in FIG. 5 shows two primary loss functions: a triplet loss function 502 and a multi-similarity loss function 504. In the triplet loss function 502, the processing system may use three images: an anchor image 510, a positive sample 512 (which is similar to the anchor image), and a negative sample 514 (which is dissimilar to the anchor image). The system may configure the neural network by reducing the distance between the anchor 510 and the positive sample 512 while increasing the distance between the anchor 510 and the negative sample 514. The multi-similarity loss function 504 may include groups of images, where each group contains images that share intra-group features, such as geographic similarities. These images may be paired as positive and negative pairs based on common and distinct features within the group, allowing the system to refine the neural network model further by accounting for both inter-group and intra-group differences. These operations may allow the neural network to focus on similarities and dissimilarities across different types of satellite images, which may allow the system to handle a variety of different matching challenges.

One aspect to consider is the loss function to be used to ensure that the neural network may capture the main feature elements in the imagery and measure the distances between embeddings properly. It may be advisable to use a contrastive loss function, such as triplet loss or multi-similarity loss functions, but other alternatives that do not focus on exploiting similarity between images could also be used. The triplet loss function may use 3 images. One is called the anchor, which is an image taken as a reference. The two additional images - one a positive sample (image similar to the anchor) and one a negative sample (image very dissimilar to the anchor) - may be chosen to maximize or increase the distance between the anchor and the negative and minimize or reduce the distance between the anchor and the positive. The multi-similarity loss function may use groups of several images that have common intra-group features, i.e., images from the same region (see FIG. 5) but have different inter-group features.

In some embodiments, the processing system may be configured to select a loss function to allow for more accurate feature capture and distance measurements between embeddings. In a preferred embodiment, the processing system may select a contrastive loss function, such as triplet loss or multi-similarity loss. In triplet loss, the system may use an anchor image, a similar (positive) image, and a dissimilar (negative) image to optimize the model. In multi-similarity loss, groups of images sharing intra-group features may be used to refine the model.

Another characteristic to take into account would be the content of the images used during training or, as stated previously, how data augmentation may be useful for this purpose. Since satellite images may not match exactly, pixel by pixel, with the reference images seen on the ground, it may be necessary to use data augmentation to shift the images used during training by a random number of pixels within a range and in any direction. This may produce a neural network model that is much more robust to shifts than a model trained without this technique, where shifts may be due to a misalignment between target and reference images. The same process may be applied to generate rotated images during training, thus obtaining a neural network model robust to rotations. Several of these techniques may be applied simultaneously if necessary. Off-nadir imagery may also be used to help to address this problem, where the off-nadir angle is the angle between the line joining the satellite with the Earth centre and the principal axis of the imager.

In some embodiments, the processing system may be configured to apply data augmentation during training to improve robustness to shifts and rotations by adjusting pixel positions or rotating images to simulate real-world distortions. In some embodiments, the processing system may be configured to use off-nadir imagery, with varying angles between the satellite's line of sight and the Earth's center, to improve robustness to angular distortions.

When the neural network model training requires pairs or groups of images that belong to the same ground region, the input images may require preprocessing to match the exact region of the ground when some variability is applied to them. Thus, using the longitude and latitude of the diverse input images, they may be cropped and scaled into subregions with the same GSD. This preprocessing stage may allow the model to learn that two regions belong to the same ground position, even if they have different shifts, rotations, off-nadir angles, or any distortion in general.

In some embodiments, the processing system may be configured to preprocess input images to provide alignment with geographic regions during training, particularly when using image pairs or groups. In some embodiments, the preprocessing operations may include cropping and scaling images to maintain consistent GSD and geographic alignment despite distortions.

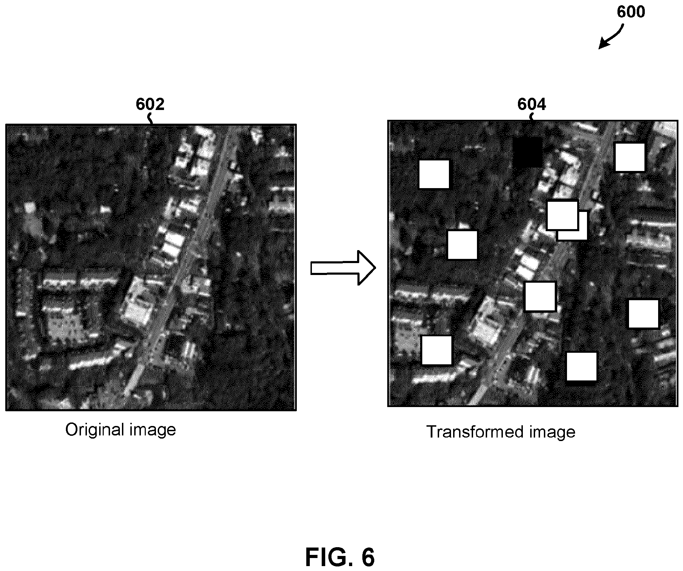

To face the problem of small features, such as vehicles or clouds, which do not appear in every image due to their high variability, there are various possible solutions like using images with these features during training, masking them (see FIG. 6), or removing them using a detection network if possible.

FIG. 6 illustrates a computing system 600 that may be configured to apply masking during the data augmentation process in accordance with some embodiments. The processing system may use this technique to manage small, variable features in satellite images, such as vehicles or clouds. In the example illustrated in FIG. 6, the system includes an original image 602 of a geographic area that includes various features and a transformed image 604 in which masking has been applied to specific areas. These masked regions, represented as white or black boxes, may obscure small or variable features that might otherwise complicate georeferencing tasks. By applying such masking techniques, the neural network may be trained to focus on more stable, consistent features within the image, allowing the system to ignore temporary or irrelevant objects during georeferencing. This process, along with other data augmentation strategies such as image rotation and pixel shifting, may be used to create a more robust neural network model capable of handling real-world variations in satellite imagery.

Other augmentation techniques may include applying neural network models to remove as much noise as possible or to generate/collect images from the same region in different seasons or times of the day (in order to train the network to be robust to seasonal or daily light/vegetation variations).

In some embodiments, the processing system may be configured to manage variable small features such as vehicles or clouds by incorporating them into training data and masking or removing them with a detection network. In some embodiments, the processing system may be configured to use data augmentation (e.g., using images from different times or seasons, etc.) to increase robustness against environmental changes.

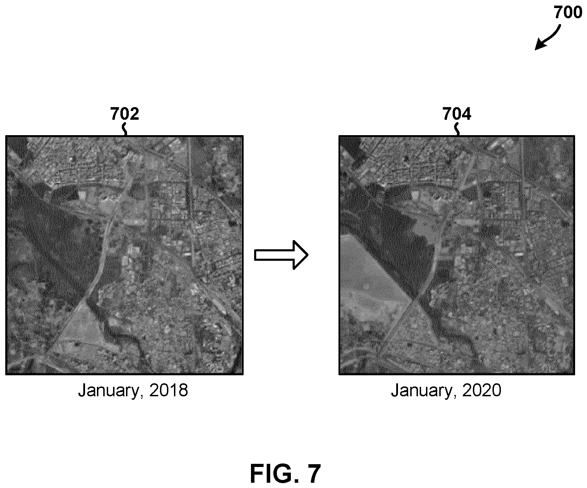

In the case of the necessity of making the neural network model robust to other features with low variability, the model may be trained with imagery from the same regions that present seasonal or temporal variations (see FIG. 7). In all cases, the goal is to train the network to be robust to variations in those features that are less stable and whose appearance changes, while training it to efficiently extract those features that are stable and most appropriate for matching between captures. Another approach to generating training data that reduces manual labelling requirements is to select positive pairs by choosing the same image captured at different wavelengths, e.g., the same geographic region but in different sensor bands. This approach may help ensure some variability while not requiring the manual selection of positive pairs. Negative pairs may be automatically chosen by ensuring distinct geographic coordinates between the negative pairs.

FIG. 7 illustrates a computing system 700 that could be configured to use imagery from different times to improve neural network performance despite variations in accordance with some embodiments. The example illustrated in FIG. 7 includes an image 702 from January 2018 that is compared with an image 704 from January 2020 of the same geographic region. These two images 702 and 704 illustrate how the processing system may use temporal data as part of the training process. By training the neural network with images of the same region taken at different times, the system 700 may focus on stable, consistent features while being resilient to transient changes, such as vegetation growth or lighting conditions.

In some embodiments, the processing system may be configured to train the neural network to handle seasonal and temporal variations by using imagery from the same regions captured at different times. This may allow the network to focus on stable features and build resilience to transient changes. The system may also automate training data generation by pairing images from the same region captured at different wavelengths to introduce variability without manual labeling.

There are several ways to proceed in the matching part (Step 3). However, two options are to have the embeddings precalculated and stored, for example, in a database of embeddings and associated coordinates, or to calculate them on the fly. In the first scenario, it may be necessary to compute the embeddings for all the regions of interest. Computing the embeddings for all subregions within a bigger region may not result in a large storage size (since the embeddings are, by definition, significantly smaller than the images from which they capture the features). Still, it may take some time, depending on the number of subregions used during the pre-computation.

In some embodiments, the processing system may be configured to perform the matching operations (Step 3) by pre-calculating and storing embeddings or calculating them on the fly. Pre-calculated embeddings, stored for regions of interest, may reduce runtime computation but may require some pre-processing based on the number of subregions.

These big regions, which represent the already-georeferenced ground image, may not be limited to a single instance but to a set of them, presenting slight differences between them, such as the amount of light, the presence of clouds, or, as stated previously, seasonal changes. This would help the system to retrieve a more precise region in the first stages using the obtained metadata, which would produce a more accurate matching process. The ground embedding generation process may also involve the use of overlap between patches used for embedding. By pre-calculating embeddings for overlapped regions, the precision of the later georeferencing may be improved.

In some embodiments, the processing system may be configured to handle large regions by using multiple instances of georeferenced images to account for variations such as lighting or seasonal changes. The processing system may generate or use pre-calculate embeddings for overlapping patches to enhance precision (e.g., by offering more comprehensive reference points during matching, etc.).

It may also be necessary to have a database or file relating every embedding to its correspondent image, as well as other important information, such as its coordinates (latitude and longitude), the size (width and height), the GSD, or any other pointing information which could be helpful. Of course, another important element for this step may be to have the neural network model ready to be loaded when necessary, similarly to the processes on satellite.

In some embodiments, the processing system may be configured to maintain a database linking embeddings to their corresponding images, geographic coordinates, GSD, and other relevant data. This database, along with the trained model, may be readily available for efficient runtime georeferencing.

The database may be augmented over time, storing the embeddings obtained from calculating them during the matching phase. This may increase the overall accuracy of the system at the cost of more pre-processing effort/computations. This database may also help us remove the non-static features from a series of regions where prior data is known. Time series reference embeddings for the same regions could be used to filter the embeddings such that fast dynamics are removed from the reference embeddings. Alternatively, the embeddings could be weighted (for the later matching process) based on some metric of the time series data, such as stability or entropy, or the weighting could be based on a clustering of the embeddings themselves.

In some embodiments, the processing system may be configured to augment the embedding database over time to include the embeddings generated during matching. This may enhance precision while potentially increasing resource demands. The processing system may use time-series data to filter out dynamic features. The processing system may apply weighting to embeddings based on factors such as stability or entropy to improve the quality of the matches.

Additional data may also help the system achieve its final goal. This metadata could consist of the time of the day, year, coordinates of a tile in the reference image, GSD or altitude of the satellite when the image was taken, among others. Knowing these parameters, it is possible to establish a fair comparison between embeddings during the matching phase on the ground, relating the received embeddings to those that are closer to their specific characteristics (e.g., using distinct clusters of embeddings, only a subset of which clusters are used at the matching stage, with the cluster(s) chosen based on the metadata similarity to the query image).

In some embodiments, the processing system may be configured to refine georeferencing using metadata such as time of day, year, geographic coordinates, and GSD. In some embodiments, the processing system may be configured to cluster embeddings based on this metadata for more accurate matching during georeferencing.

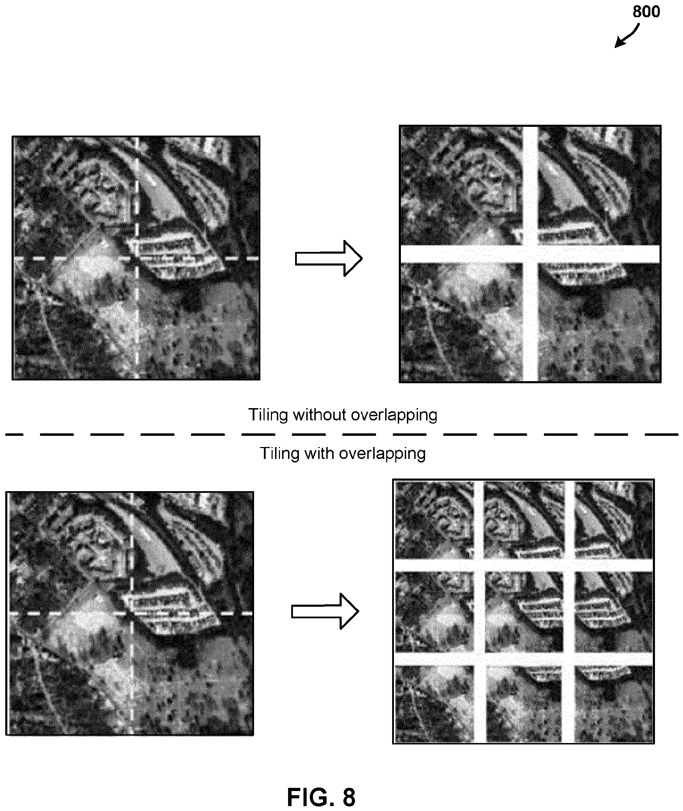

Furthermore, it is important to consider that calculated embeddings could refer to overlapped regions (see FIG. 8), depending on the approach followed during image tiling, which may consume more time and storage but improve the overall accuracy of the system, thus making the neural network model less dependent on its robustness to shifts. This step may also be performed at runtime.

FIG. 8 illustrates a comparison between tiling without overlapping and tiling with overlapping in a computing system 800, which the processing system may use during the embedding generation process. The top row of FIG. 8 shows an example of tiling without overlapping, where the satellite image is divided into distinct non-overlapping tiles. The bottom row shows tiling with overlapping, where additional tiles are created by allowing portions of the image to overlap. The system may implement overlapping tiling to improve georeferencing accuracy by providing more data for the neural network model to process, reducing the dependency on robustness to image shifts or distortions. Overlapping tiles may offer more comprehensive coverage and may lead to better matching and alignment during georeferencing.

In some embodiments, the processing system may be configured to include overlapping regions in embedding calculations to improve accuracy. This overlap may reduce dependency on neural network robustness for shifts and help provide more consistent georeferencing.

The first stages of the runtime georeferencing process take place at the edge - onboard the satellite in the case of EO satellites. An image is captured on a satellite, within which one or more features of interest are detected. The on-board element of the georeferencing method may require that one or more feature vectors (embeddings) in latent space be extracted from this image, using the pre-trained neural network in order to obtain the corresponding embeddings, prior to sending them to Earth.

In some embodiments, the processing system may be configured to perform initial georeferencing onboard the satellite. The processing system may capture images, detect features, and extract embeddings using a pre-trained neural network. The processing system may transmit these embeddings, rather than full images, to Earth for further processing.

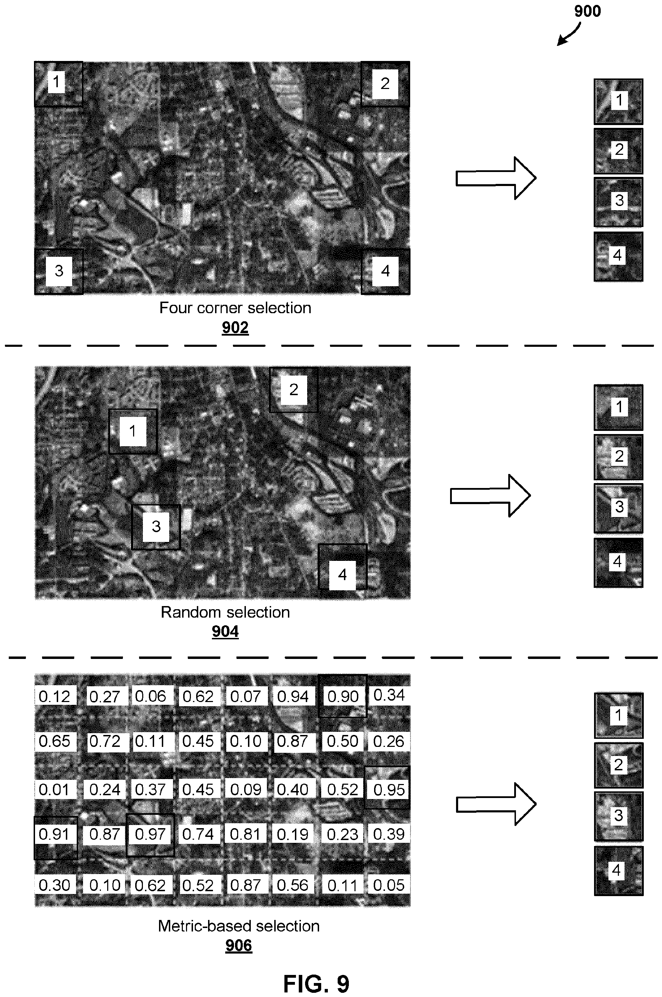

It is desirable for the images obtained to be of the best quality possible, where the quality may depend on at least the camera and sensors implemented on the satellite. Since the matching phase (Step 3) is subject to failures in matching, several embeddings may be taken from close regions to ensure that at the end, a minimum number of correctly matched embeddings to locate the desired position may exist. An example procedure is to select the 4 corners of the captured region and/or the tile in the centre, or other strategies like random selection or a metric-based selection (see FIG. 9); but it ultimately may depend on the edge compute resources available on the satellite, and on how many feature vectors may be extracted in the available processing window and power envelope, and how many may be transmitted to ground within the required timeframe. Regarding the metric used, there are many options available: one approach is to use the image entropy, which measures the randomness of an image; another is to use a statistic on the gradients in the image. Another is to use tile dissimilarity between tiles; another is to use the magnitude of the embeddings; another is to use the skew or kurtosis of the embeddings.

FIG. 9 illustrates strategies for selecting image regions (tiles) for embedding extraction in a computing system 900: four-corner selection 902, random selection 904, and metric-based selection 906. In four-corner selection 902, the processing system may select predefined tiles from the image corners, obtaining coverage but potentially missing key features. In random selection 904, tiles are chosen randomly, offering varied sampling but possibly including less informative areas. In metric-based selection 906, metrics like image entropy may be used to prioritize tiles with higher information content. These strategies 902-906 may be selected based on computational resources and operational needs to target the most relevant regions and improve georeferencing accuracy while balancing trade-offs between precision and efficiency.

In some embodiments, the processing system may be configured to prioritize high-quality images (e.g., because sensor quality impacts georeferencing accuracy, etc.). The processing system may extract embeddings from multiple regions, such as the image corners and center, based on edge processing resources and satellite power limitations. The processing system may use metrics such as entropy to identify the most informative tiles.

The strategies may be generalized to a different number of embeddings or other strategies that could be useful in determining the desired coordinates. For example, it is possible to calculate the embedding corresponding to every subregion within the input region and then rank them based on a metric such as the entropy, previously mentioned, the standard deviation, or any other that gives priority to images that present features that make them more differentiable to the others. A neural network could also be used to order and select the best Areas of Interest (AoI), as an example, but any other option to select the best regions is valid.

In some embodiments, the processing system may be configured to generalize embedding extraction to handle variable application needs, ranking tiles by metrics such as entropy or standard deviation to prioritize distinctive features. In some embodiments, the processing system may use a neural network to help identify the most relevant areas for georeferencing.

In addition to transmitting the embeddings to the ground, it is also an option to additionally downscale the images and transmit them, e.g., additionally send image thumbnails to the ground. This is a good idea when the images present very clear features that make them easily different from the other regions, i.e., coastlines, big buildings, etc. Also, this may be very helpful in situations where the usage of the GNSS is denied, for example, drones in conflict zones.

In some embodiments, the processing system may be configured to transmit downscaled images, such as thumbnails, alongside embeddings. This may be useful when images contain distinct features, such as coastlines or buildings, or when GNSS is unavailable, such as in drones operating in conflict zones.

It may also be of relevance to calculate and measure the approximate relative distances between the selected image patches and their relative position within the image, so this information is included in the metadata sent to the ground for Step 3 and, more precisely, to the matched images.

In some embodiments, the processing system may be configured to calculate relative distances between selected image patches and their positions within the full image. The processing system may include this spatial information in the metadata transmitted to the ground to improve precision during phase/step 3 (e.g., by allowing for more accurate alignment with reference images, etc.).

As mentioned previously, it may also be important to select patches with relevant information so they may be encoded properly. There exist several alternatives, depending on the system constraints (i.e., computational cost, time spent, accuracy required), such as choosing patches randomly or based on a given metric. The latter may be the best option to select patches including a huge amount of relevant information, using a metric such as entropy to measure randomness in a tile, which would help the system to discard regions with no notable features (i.e., regions with only water). The quantity of selected patches is as relevant as the quality of those since a larger amount would help to achieve more precise results, with the cost of more computational time and transmission demands.

In some embodiments, the processing system may be configured to focus its operations on selecting patches with significant features for encoding. Patch selection may vary based on system constraints, such as computational cost and accuracy requirements. The processing system may use metrics such as entropy to identify high-information patches and avoid regions with minimal features, such as open water. Both the quantity and quality of selected patches may affect georeferencing accuracy.

In order for the network to work properly, these patches may need to be pre-processed to be similar to the images used for the network training. If the input image GSD is the same as the images used during training, it is as simple as only tiling the original image, but if this is not the case, some extra steps may need to be performed. For example, if the GSD of the input image is coarser than the training one, it is necessary to select a larger tile of the input region to be resized to the network input.

In some embodiments, the processing system may be configured to preprocess selected patches to align with the images used during training. The processing system may tile the image directly in response to determining that the captured image's GSD matches the training data. Otherwise, the processing system may resize larger tiles to match the input size of the network.

In some embodiments, the processing system may be configured to combine feature extraction with object detection to generate additional embeddings for downlink and use during matching.

Once the image patches have been selected for a given image captured on satellite, their associated embeddings may be calculated. In order to do so, two elements may be needed: (1) The image patches obtained in the previous step (these images usually need to be processed in some way to adapt them to the input tensor size of the used neural network (e.g., resized or resampled)) (2) the selected model to encode the images and transform them into their corresponding embeddings.

In some embodiments, after selecting image patches, the processing system may calculate their embeddings using the selected model. In some embodiments, as part of these operations, the processing system may resize or resample patches to fit the network's input tensor size before encoding.

Once the embeddings are calculated, they may be prepared for transmission to Earth. This process may include bundling them with other useful information, such as the previously computed relative distance between images, or any other pointing information or metadata, such as GNSS position. This comprehensive package may be sent to Earth for further analysis and use.

In some embodiments, the processing system may be configured to transmit the calculated embeddings to the ground along with metadata such as patch distances, GNSS data, or other pointing information.

Once the embeddings and the necessary information have been sent from the satellite and received on Earth, the remaining stages may be executed until the final localization of the desired region/feature is obtained. Due to possible constraints of the satellite delivery capacity, the embeddings may not be sent at once but progressively, iterating through more and more precise results.

In some embodiments, after transmitting the embeddings and metadata, the processing system may execute the remaining georeferencing stages on Earth. The processing system may refine the results with each iteration for more precise geolocation.

First, the received embeddings may be loaded and selected one by one, compared against the embeddings of the associated reference image. The associated reference image is chosen based on the pointing and GNSS metadata that is transmitted from the satellite with the embeddings. By combining some or all of the (approximate) GNSS location, the (approximate) satellite pointing information, and the (approximate) satellite altitude in a geometric model, the approximate geographic location of the image may be determined with some error. This approximate location is used to choose the reference image (and, ultimately, the reference embeddings). If the pre-calculated embeddings for this reference image are already available (from Step 1), then the matching process may begin. Otherwise, the reference image may be tiled into possibly overlapping patches, and the neural network may be used to extract the embedding for each patch. In one system embodiment, the reference image may be first resized so that the GSD matches that of the image from which the embeddings were extracted on the satellite. This GSD is typically known a-priori, since it is a property of the imager and controlled via user configuration. It could also be available as part of the metadata downlinked from the satellite.

In some embodiments, the processing system may be configured to commence the georeferencing operations by loading received embeddings and comparing them to reference image embeddings based on GNSS and pointing metadata. The system may select reference images and their associated embeddings using a geometric model and determine approximate geographic location (despite some error, etc.). In some embodiments, the processing system may use the pre-calculated reference embeddings for immediate matching. In some embodiments, the processing system may tile and process the reference image to generate embeddings.

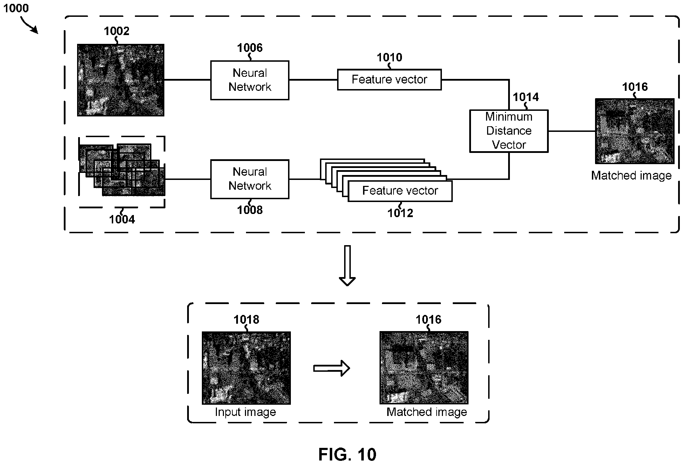

Once downlinked and (pre)calculated embeddings are available, the next step is matching. The downlinked embeddings may be compared against the reference image embeddings in order to obtain the closest match or matches in terms of some similarity metric and thus retrieve the closest matching reference patch (see FIG. 10).

FIG. 10 illustrates a system 1000 for matching satellite image embeddings using neural networks. The process begins with an input image 1002 and a set of reference images 1004, which are processed through neural networks 1006 and 1008 that extract feature vectors 1010 and 1012 representing the most important elements of the images. These feature vectors 1010 and 1012 may be compared in a minimum distance vector 1014 calculation to determine which reference image is the closest match to the input image. The reference image with the closest matching feature vector may be identified as the matched image 1016. The system may compare the input image 1018 with the matched reference image 1020 to confirm the geolocation or feature alignment.

If it is decided not to pre-calculate the embeddings, there are various procedures to compute them on the fly. Note that since the matching and reference embeddings may be performed on the ground, the computing power available is typically far greater than that available on satellite.

In some embodiments, the processing system may be configured to match the downlinked and pre-calculated embeddings using similarity metrics to identify the closest reference patches. In some embodiments, the processing system may be configured to compute them on the fly (using the more robust ground-based computing power) in response to determining that pre-calculated embeddings are not available.

In some embodiments, the method may include using a multiphase solution to calculate overlapping embeddings for the reference image. A preprocessing step for the images may be performed to make them as similar as possible to those used for training in terms of number of channels, GSD, size, scale, etc.

Then, the input embeddings are matched to the reference embeddings. The specific reference embeddings used may be a fixed set in the case where only one set for a given geographic location is available, or they may be chosen based on the metadata received from the satellite. For example, where a choice of reference sets is available, the comparison set may be chosen based on a matching time of day, year, or weather conditions, for example. Alternatively, more than one reference set may be chosen. In all cases, the reference set should be chosen based on the estimated FOV of the satellite image (itself calculated from the position and pointing information included in the metadata). The matching task, therefore, may determine the reference embeddings that are closest to the embeddings downlinked from the satellite.

In some embodiments, the processing system may be configured to apply a multiphase approach to compute overlapping reference embeddings. The processing system may verify that the reference image matches training data in terms of channels, GSD, and scale. The processing system may then match downlinked embeddings to reference embeddings, selecting sets based on satellite metadata such as time of day or weather. In some embodiments, the processing system may use multiple reference sets, with the selection guided by the satellite image's field of view.

Where the reference embeddings are calculated on the fly on the ground, some extra preprocessing steps may be applied. For example, scaling, radiometric distortion, lens distortion, or some other imaging process that may be modeled (e.g., noise) may be applied to the reference images prior to tiling and embedding in order to calculate embeddings that may more closely match the embeddings calculated on satellite (where image processing and conditioning may not have been applied, or only partially applied). Corrections for ground terrain height variation may also be applied using Digital Elevation Map (DEM) data, which in many use cases would already be available for the reference data. Such preprocessing may also be applied or partially applied when pre-calculating the reference embeddings, e.g., if some static parameters for the satellite/imager are known a-priori, these may be utilised when generating the reference embeddings in order to reduce the on-the-fly processing required to generate these embeddings by reducing the candidate search space.

In some embodiments, the processing system may be configured to apply additional preprocessing, such as scaling, distortion corrections, or terrain height adjustments using DEM data when calculating reference embeddings on the fly. The processing system may apply preprocessing when pre-calculating reference embeddings to narrow the search space and reduce on-the-fly processing demands.

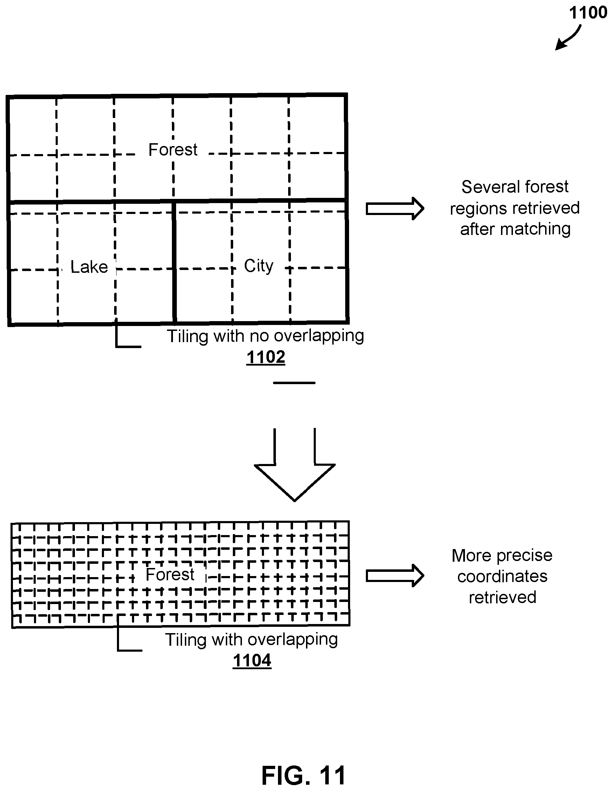

Once the reference image region is retrieved, new embeddings for this region may be calculated, but since this is smaller than the starting one, it is now possible to overlap them and calculate embeddings for overlapped patches. In an optional additional step, the process may be repeated in an iterative fashion, such that the embeddings with the closest match are used to trigger a follow-on overlap and embedding step. In this way, the system may iteratively improve the accuracy of the match over several tile-embedding extract-compare iterations (see FIG. 11).

FIG. 11 illustrates a comparison between two approaches to tiling in a computing system 1100, specifically tiling with no overlapping 1102 versus tiling with overlapping 1104, as part of the embedding generation and matching operations. The system may perform tiling with no overlapping 1102 in which the image is divided into distinct non-overlapping tiles representing different regions such as forests, lakes, and cities. After matching, multiple forest regions may be retrieved, but the precision of the retrieved coordinates may be limited due to the lack of overlap in the tiles. In tiling with overlapping 1104, the system may create tiles with some degree of overlap, which allows the system to retrieve more precise coordinates. This process may offer greater accuracy in identifying the exact regions of interest (e.g., forests) by providing more data points for the neural network to process during the embedding and matching stages. The overlap may improve the overall matching precision by, for example, compensating for potential variations or shifts between the captured image and the reference data.

In some embodiments, the processing system may be configured to calculate new embeddings after retrieving the reference image region and, through an iterative process, refine matching accuracy by overlapping embeddings and progressively narrowing the search space.

Another strategy is a pyramidal approach, where the amount of patch overlap for reference tiles is progressively increased, with the spatial search region commensurately reduced to 'focus-in' on the revision with best matches and improve the matching resolution therein. Also, if it was decided to downsample the images in the satellite processes, it may be necessary to do the same prior to the matching to have a valid comparison between embeddings. However, this strategy may not work well with differently scaled images if the neural network is only trained with images with a fixed size. To solve or palliate the effect of working with images with different GSD, different strategies may be applied at the neural network training stage, such as working not only with variations like shifts or rotations but also to modify scale levels so that the developed model is robust against these scale changes. This way, a pyramidal procedure is also feasible during the training stage as an optional feature during this phase.

In some embodiments, the processing system may be configured to implement a pyramidal scheme that increases patch overlap while reducing the search region to refine matching. The processing system may downsample reference images for more accurate comparisons in response to determining that downsampled images were used on the satellite. The processing system may train the neural network with varying scales during the training stage to manage scale variations.

Regarding the source of the images needed to calculate the embeddings prior to the matching process, there are several options or alternatives depending on the focus of the system. For example, it could be sourced from existing open databases of satellite images, such as Copernicus Sentinel 2 or Landsat, or from other satellite missions that fly a sensor with similar characteristics.

In some embodiments, the processing system may source reference images from open satellite databases or other satellite systems with similar sensors.

At this point, the reference patches with the best embedding matches to the downlinked embeddings have been identified. The reference embeddings map to known sets of coordinates in a standard reference system (typically latitude and longitude). However, the system may make mistakes during the matching stage for different reasons, especially if the region being analyzed presents no features of relevance or those that are similar to the features of another region. For this reason, and since the relative image distances between the original patches are known, it is possible to discard those matched tiles which are known to be wrong. This strategy could be applied differently depending on the patches selected as reference since relative image distances are calculated more easily if the selected regions are the corners or the center of the image. However, using a larger amount of patches may produce more robust systems.

In some embodiments, after identifying matched reference patches, the processing system may map the embeddings to geographic coordinates and discard mismatched tiles by analyzing relative distances. The processing system may improve system robustness by using more patches or strategically selecting regions.

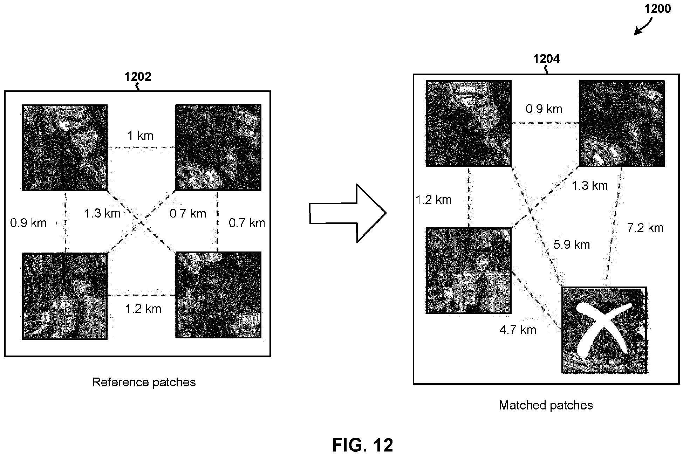

During the satellite stages of the system, if the relative distances between the delivered patches are obtained along with the satellite pointing and position information, we may compare them to the distances between the matched regions. Through this process, it is possible to detect in several scenarios if one of the matched patches is located far from the others, thus not being in the expected position compared to the rest of the matched regions (see FIG. 12). If this was the case, this image could be discarded so it is not considered for the localization phase. It may also be desirable to consider a threshold while comparing relative positions since a common scenario is to match an adjacent image to the desired one.

FIG. 12 illustrates a system 1200 for comparing reference patches and matched patches during the georeferencing process. The example illustrated in FIG. 12 includes reference patches 1202 and matched patches 1204. The reference patches 1202 are shown with their corresponding distances between each other in kilometers. The processing system may calculate these relative distances between reference patches based on the spatial distribution of known geographic features. The matched patches 1204 are displayed after the embedding matching process. The system may calculate the distances between the matched patches 1204 and compare them with the original distances between reference patches 1202. If significant deviations are found-such as the large discrepancies between matched patches shown on the right (e.g., the 5.9 km and 7.2 km distances)-the system may flag and discard the mismatched patch, as illustrated by the "X" over one of the patches. Distances in FIG. 12 are shown as ground distances but could equally be image distances.

In some embodiments, the processing system may be configured to compare patch distances, satellite pointing data, and matched regions, and to discard patches with inconsistent relative positioning. The processing system may apply a threshold to account for deviations, such as matching adjacent images.

This threshold could either be fixed or adaptive, depending on the use case of the system and the precision loss that may be tolerated. In satellite imagery scenarios, a loss of several hundred meters may be allowed, but, for instance, in video surveillance scenarios, it may not be acceptable. For these reasons, the threshold may be set prior to the system usage, or a value could be established after empirical testing, or the threshold could be set dynamically based on some image or matching metric or statistic.

In some embodiments, the processing system may be configured to select and use fixed or adaptive thresholds for relative position comparisons based on the required precision. For example, the processing system may accept larger deviations for satellite imagery and smaller losses for video surveillance. The processing system may use thresholds that are set in advance or adjusted dynamically.

An additional step to improve the robustness of the system is to filter the matched embeddings. One such approach is to use an iterative method with outlier rejection, such as Random Sample Consensus (RANSAC), which is commonly used to estimate a mathematical model in data with outliers. Here, the outliers would be the regions that are not correctly matched and, therefore, are far from the others in terms of distance. RANSAC may be used to determine which of these regions are not suitable for the position localization phase.

In some embodiments, the processing system may be configured to improve robustness by filtering matched embeddings using RANSAC to identify and reject outlier regions that are incorrectly matched.

To improve the system's robustness, e.g., in the case where the neural network is unable to provide the correct region via the closest embedding, a possibility exists to retrieve not only the closest embedding but also a set of them. This would help in cases where several tiles from regions with no notable features exist, e.g., forests. With this approach, if the closest embedding is not correctly matched, the system is able to repeat the same process for the remaining embeddings. This makes the system more robust to matching failures. For example, a filtering stage could be employed that rejects matches where the matching distance to the closest embedding is not at least a fixed multiple smaller than the matching distance to the second closest embedding.

In some embodiments, the processing system may be configured to enhance robustness by retrieving multiple nearby embeddings rather than only the closest. This may help in regions with minimal distinguishing features. A filtering stage may reject matches where the distance to the closest embedding is not sufficiently smaller than to the second closest.

An alternative matching approach is to use a clustering algorithm. The approach works by translating all matched patches back to the image origin. This is done by applying a shift equal to the negative of the patch location in the original (satellite-captured) image, measured in pixel coordinates. The centres of all the shifted patches are then clustered using an unsupervised clustering technique. The cluster with the largest number of members is then selected, and all patches that are members of this cluster are used for the localisation step. This filters out mismatched patches through clustering. Thresholding may also be applied during the cluster selection step, allowing the absolute error between any matched tile and its correct position to be limited to a maximum of meters.

In some embodiments, the processing system may be configured to apply clustering for matching by translating matched patches to a common origin and clustering them based on pixel coordinates. In some embodiments, the processing system may use the cluster with the most members for localization and apply a threshold to limit matching errors.

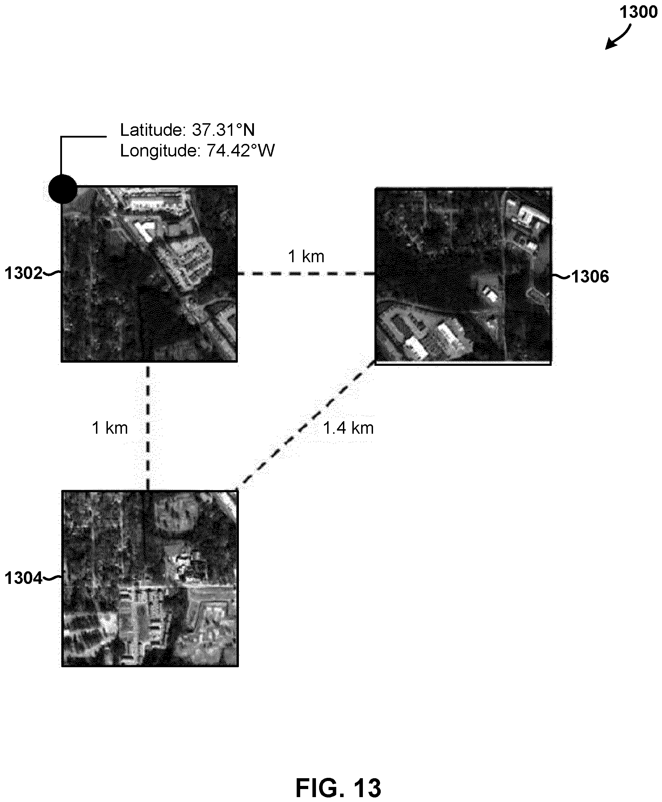

Once a set of correctly matched patches is obtained, as well as the additional information used to describe them, such as the relative position within the analyzed region or its coordinates, it is possible to calculate with high precision the position of the features in the original image. As several patches may typically be matched per image, one approach is to take the average position between them so the result is more robust to different variations such as shifts or rotations. Taking this average position as a reference point and the information regarding the width, height, latitude, longitude, etc., the position of any other point may be calculated, as well as its coordinates (see FIG. 13).

The set of coordinates or additional information obtained could be used for other purposes. For example, if combined with an object detection network designed for ships, it would be possible to know the approximate coordinates of these objects within the latitude/longitude world coordinate system.

FIG. 13 illustrates system 1300 for determining precise geographic coordinates by matching reference patches and calculating relative distances in accordance with some embodiments. The system 1300 may identify reference patches 1302, 1304, and 1306 from satellite images. In the example illustrated in FIG. 13, the distances between them are displayed in kilometers (e.g., 1 km between patches 1302 and 1306, 1.4 km between patches 1306 and 1304). These distances may be based on the known spatial distribution of geographic features. The processing system may match the reference patches and use their positions and distances to compute the region's latitude and longitude (37.31°N, 74.42°W). In some embodiments, the system may average the positions of multiple matched patches to account for shifts or rotations. System 1300 may also determine coordinates for other features in the image, which may be integrated with other systems, such as an object detection system.

In some embodiments, the processing system may be configured to calculate the precise positions of features after obtaining correctly matched patches. In some embodiments, the processing system may calculate the precise positions of features by averaging the positions of multiple matched patches. In some embodiments, the processing system may use metadata such as latitude, longitude, width, and height to determine coordinates for other points in the image. In some embodiments, the processing system may use the calculated coordinates for additional purposes, such as integrating them with object detection networks to identify and locate specific objects, like ships, within the latitude/longitude world coordinate system.

In a further embodiment, the matching and localization step may be performed at the edge, e.g., on the satellite. In this embodiment, the reference image embeddings may be pre-uploaded to the satellite. This could be done, for example, when a particular ground Region Of Interest (ROI) is known a-priori, such as in a geo-fenced security application. In this scenario, a known ROI is to be monitored directly on satellite. The monitoring could consist of detecting changes since a reference image capture or since the last image capture or could consist of detecting objects/features of interest only within this ROI (e.g., ships, vehicles, landslides, or earth movement). In this embodiment, the reference embeddings are calculated on-ground for the ROI and then uploaded either pre-flight or during flight but in advance of the images captured for real-time monitoring (for example, along with the image schedule request). In this way, the matching and localization output is a direct georeferenced result since the exact geolocation of the reference embeddings is also pre-uploaded to the satellite. The satellite may, therefore, directly provide geolocated information about the features in the image. This may be done by communicating the geolocation of the feature of interest directly to the end user, via inter-satellite communications channels or directly via a dedicated communications channel. In a further embodiment, the steps in the previously described approach may be divided across two or more satellites, where on a first satellite, the captured image embeddings are calculated, and these are shared with other trailing satellites via, for example, an inter-satellite communications link. In this way, the leading satellite may identify a feature or region of interest and share the embeddings of the region. In contrast, trailing satellites that receive these embeddings may capture the same feature or ROI (based on location and pointing information from the first satellite) and use the proposed georeferencing approach to perform image registration. Once registered, a differencing approach may obtain changes in the ROI, and the results may be communicated to the end-user or other satellites.

In some embodiments, the processing system may be configured to perform matching and localization onboard the satellite and pre-upload reference embeddings when a specific ROI is known in advance, such as in geo-fenced security applications. The system may monitor the ROI for changes or detect objects within it. The satellite may directly provide geolocated information to the end user via inter-satellite or dedicated communication channels. In another embodiment, the captured image embeddings may be shared with trailing satellites, which may use the georeferencing approach to register and monitor the same ROI for changes and send the results to the user or other satellites.

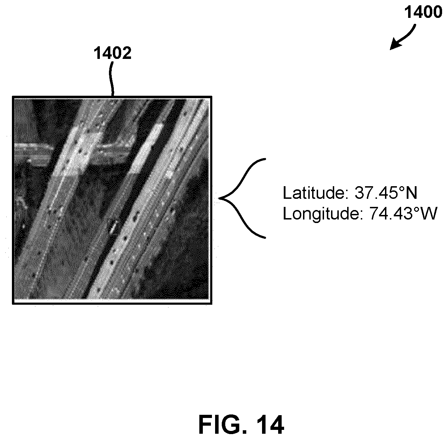

With respect to other possible applications of this technology, there is a wide variety of uses outside the satellite imaging/EO domain. It is applicable for any imagery that has small perspective effects, for which reference imagery is available, and in which the requirement is to geolocate one or more features of interest. For example, this could be geolocation of vehicles (see FIG. 14), buildings, fires, etc.

Thus, it should be understood that the embodiments discussed herein may be applied to various use cases beyond satellite imaging and EO, such as for geolocating features in any imagery with small perspective effects in any system that could benefit from more precise feature geolocation. As such, nothing in this application should be used to limit the claims to satellite imaging or EO unless expressly recited as such in the claims.

FIG. 14 illustrates system 1400 for determining the geographic coordinates of features, such as vehicles, in satellite imagery in accordance with some embodiments. In the example illustrated in FIG. 14, the system 1400 may identify a specific feature 1402 (e.g., a road with vehicles) and calculate the precise latitude and longitude coordinates (37.45°N, 74.43°W). The system may integrate the calculated coordinates with other systems, such as object detection networks, for identifying and locating specific objects, such as vehicles, within the latitude/longitude world coordinate system.

In some embodiments, a processing system in a satellite may be configured to perform DiPAGEO operations for georeferencing a captured image onboard the satellite that include capturing an image of a target region, dividing the captured image into multiple tiles, and using a pre-trained neural network onboard the satellite to process each tile of the captured image and generate a first set of embeddings that each characterize or represent relevant features of a respective tile. In some embodiments, the pre-trained neural network may encode geographic features such as rivers, buildings, and terrain into continuous high-dimensional vectors representing each tile. The processing system may transmit the first set of embeddings and satellite metadata including satellite pointing and position information to a processing system included in a ground-based MOC.

In some embodiments, a processing system in the ground-based MOC may be configured to perform DiPAGEO operations that include retrieving reference embeddings corresponding to georeferenced images stored in a database based on the received satellite metadata, calculating a similarity score for each tile of the captured image by comparing the first set of embeddings with the retrieved reference embeddings, determining whether the similarity score for each tile exceeds a predefined threshold (thus identifying matched tiles), and georeferencing the captured image by correlating the pixel coordinates of the matched tiles with geographic coordinates of the reference embeddings. In some embodiments, the processing system may be further configured to update or refine the geolocation of the matched tiles using additional metadata such as GSD and satellite orientation data.

In some embodiments, calculating the similarity score may include applying a similarity metric selected from a group consisting of cosine similarity and Euclidean distance. In some embodiments, the ground-based processing system may retrieve reference embeddings from the database that correspond to previously captured and georeferenced images of the target region. In some embodiments, the processing system may refine the georeferencing of the captured image by correlating pixel coordinates of the matched tiles with known geographic coordinates from the reference image.

In some embodiments, a processing system in a satellite may be configured to perform RaPID-GEO operations for georeferencing that include capturing a target patch (e.g., part of a larger satellite-captured image, etc.) of a geographic region, and extracting by a neural network onboard the satellite feature vectors for the target patch. In some embodiments, the neural network may be configured to encode features that are robust against shifts, rotations, and off-nadir angles in the captured target patch. In some embodiments, the feature vectors may be generated to represent relevant geographic features within the target patch. In some embodiments, the processing system may transmit the feature vectors and satellite metadata to a ground-based processing system. The satellite metadata may include geographic coordinates and satellite orientation, time of capture and altitude of the satellite when the image was captured, or other similar information.

In some embodiments, the processing system may transmit downscaled versions of the target patch alongside the feature vectors for additional refinement of the geographic coordinates.

In some embodiments, a processing system in the ground-based MOC may be configured to perform RaPID-GEO operations that include receiving the feature vectors and satellite metadata, comparing the feature vectors of the target patch with pre-calculated feature vectors of reference patches stored in a database, calculating a ranking of the reference patches based on similarity scores between the feature vectors of the target patch and the feature vectors of the reference patches, determining whether the reference patches exceed a predefined similarity threshold and selecting the highest-ranked reference patch, calculating the geographic coordinates of the target patch based on the geographic coordinates of the selected reference patch, and refining the geographic coordinates of the target patch using additional metadata including satellite pointing and GSD information.

In some embodiments, a processing system in the ground-based MOC may be configured to apply a filtering step to discard feature vectors that fail to match reference patches with a similarity score above a second predefined threshold.

FIG. 15 is a process flow diagram illustrating a method 1500 of performing geolocating and georeferencing using the DiPAGEO method in accordance with some embodiments. Method 1500 may be performed in a computing device (e.g., edge device such as a satellite, etc.) by a processing system encompassing one or more processors, components, or subsystems discussed in this application.

In block 1501, the processing system may take initial satellite images. The satellite captures an image of a desired region. In block 1502, the processing system may calculate image embeddings. Using the neural network model, the embeddings corresponding to the taken images are calculated. In block 1503, the processing system may obtain satellite pointing and position information. Additional information or other data, such as GNSS and TLEs, are retrieved from the satellite system. In block 1504, the processing system may send embeddings and satellite pointing and position information to the ground. The embeddings and additional information are sent from the satellite to the Earth.

In block 1505, the processing system may receive the embeddings and satellite pointing and position information from the satellite. The sent embeddings and additional metadata are received on the ground. In block 1506, the processing system may retrieve an approximate region using received satellite pointing and position information. Received metadata, such as GNSS, pointing information, or similar information, such as TLEs, is utilized to determine the approximate region to geolocate and, if necessary, obtain the corresponding reference data from the database on the ground. In determination block 1507, the processing system may determine if the embeddings from that region are precalculated. Depending on the approach chosen, it may be possible for the embeddings from the retrieved region to have been already calculated. In block 1508, the processing system may retrieve embeddings. If the previously mentioned embeddings have been calculated, they are obtained from the reference database. In block 1509, the processing system may calculate embeddings. Otherwise, it is necessary to calculate the embeddings for the obtained region.

In block 1510, the processing system may obtain a ranking of the closest embeddings for each input embedding. For each received embedding, the closest embedding from the database (or the recently on-the-fly calculated ones) is obtained, as well as the information from the region it represents. For a more robust result, a ranking on the closest embeddings based on a metric like the distance may be obtained. It may also be possible to only retrieve the closest embedding instead of a ranking of them, which may make the system accuracy worse, but it may be faster. In determination block 1511, the processing system may determine if the closest embeddings per ranking are correct. It is checked if the first embedding from each ranking is a correct match. There are several alternatives to do this, for example, measuring the relative distances between matched patches with respect to the input ones. In determination block 1512, the processing system may determine if there are any more embeddings in the rankings that need to be checked. If not, the processing system may check if there are more embeddings in the rankings which may be a correct match, if the closest one is not a match. In block 1513, the processing system may take the next embedding in the ranking. If there are more embeddings to check, the processing system may select the next one in the ranking. In block 1514, the processing system may discard the embeddings that are unable to be matched correctly. If there are no more embeddings in the rankings, then the input embedding is discarded, as the neural network is unable to match it in a reasonable amount of time or with sufficient accuracy. In other words, the correct embedding may be located in lower positions of the ranking. In block 1515, the processing system may calculate the position from the matched embeddings and the images they represent and geolocate the tile or feature with reference to the geolocation of the reference embeddings. The process may exit, end, terminate, or finish in block 1516.

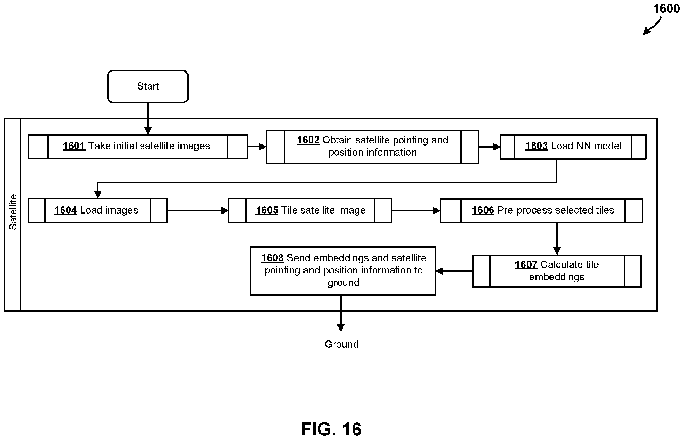

FIG. 16 is a process flow diagram illustrating the parts of the DiPAGEO method 1600 performed by the edge device configured in accordance with some embodiments. Method 1600 may be performed in a computing device (e.g., edge device such as a satellite, etc.) by a processing system encompassing one or more processors, components, or subsystems discussed in this application.

In block 1601, the processor may take initial satellite images. The satellite captures image(s) from the desired region, which may be cropped and tiled into smaller patches. In block 1602, the processing system may obtain satellite pointing and position information. Additional information, or other data such as GNSS and TLEs, may be obtained to be sent to help choose the correct reference data from the database on ground. In block 1603, the processing system may load a neural network model and prepare the neural network model to perform inference. In block 1604, the processing system may load recently taken images. In block 1605, the processing system may tile the image by cropping the image into several tiles.

In block 1606, the processing system may pre-process selected tiles. Tiles to be sent to the ground are decided based on selected criteria. The chosen tiles are then optionally pre-processed so that the neural network model may properly operate on them (e.g., adjust the size, GSD) and be similar to the ones used for the neural network model training. In block 1607, the processing system may calculate tile embeddings. The embeddings of the pre-processed images are obtained using the neural network model. In block 1608, the processing system may send the embeddings and satellite pointing and position information to the ground. The embeddings are sent to the ground, along with additional pointing information or similar, which is used to choose the appropriate reference region on the ground.

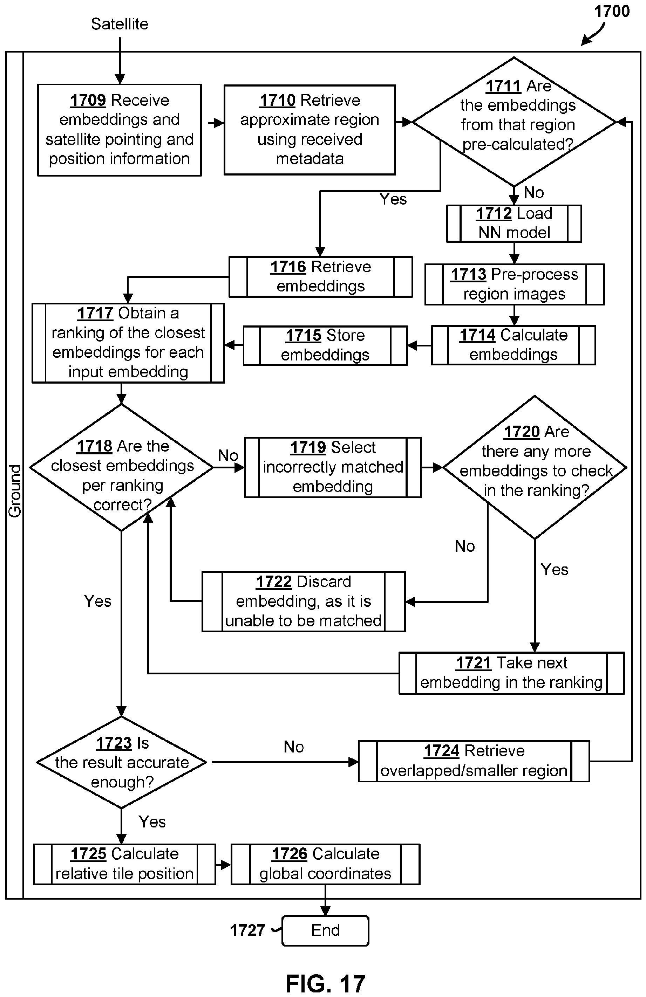

FIG. 17 is a process flow diagram illustrating the parts of the DiPAGEO method performed by the MOC configured in accordance with some embodiments. Method 1700 may be performed in a computing device (e.g., edge device such as a satellite, etc.) by a processing system encompassing one or more processors, components, or subsystems discussed in this application.

In block 1709, the processing system may receive embeddings and satellite pointing and position information. At the MOC, the embeddings and additional pointing information that were sent are received.

In block 1710, the processing system may retrieve an approximate region using received metadata. Using the previously received information, the approximate region to be geolocated is retrieved.

In determination block 1711, the processing system may determine if the embeddings from that region are precalculated. Depending on the approach chosen, it may be possible for the embeddings from the retrieved region to have been already calculated.

In block 1712, the processing system may load the neural network model. The neural network model is prepared to convert the images into their respective embeddings if they have not been pre-calculated.

In block 1713, the processing system may pre-process the region images. The images are pre-processed in order to convert them to the required neural network input format in terms of size, GSD, etc.

In block 1714, the processing system may calculate the embeddings corresponding to the obtained images using the neural network model.

In block 1715, the processing system may store the embeddings. The embeddings may be stored in order to speed up the process in other executions, skipping the latest steps.

In block 1716, the processing system may retrieve the embeddings. If the previously mentioned embeddings had been calculated, then they may be obtained from the reference database.

In block 1717, the processing system may obtain a ranking of the closest embeddings for each input embedding. For each received embedding, the closest embedding from the database (or the recently calculated ones) may be obtained, as well as the information from the region it is representing. For a more robust result, a ranking on the closest embeddings based on a metric like the distance may be obtained. It is also possible to only retrieve the closest embedding instead of a ranking of them, which would make the system accuracy worse, but would speed up the processing.

In determination block 1718, the processing system may determine if the closest embeddings per ranking are correct. It is checked if the top embedding in every ranking is a correct match. There are several alternatives to do this, for example, measuring the relative distances between matched patches with respect to the input ones.

In block 1719, the processing system may select incorrectly matched embedding. If the outcome of the previous step is negative, the embedding whose top ranked embedding is incorrectly matched is selected.

In determination block 1720, the processing system may determine if there are any more embeddings to check in the ranking. It is checked if there are more embeddings in the ranking that are suitable for the matching process, to be considered as a new top embedding in the ranking.

In block 1721, the processing system may select the next embedding in the ranking. If there are more embeddings in the ranking, then the process may select the next one.

In block 1722, the processing system may discard the embedding, as it is unable to be matched. If there are not any more embeddings to be selected in the ranking, then discard the input embedding as it is unable to be matched in a reasonable amount of time. In other words, the correct embedding is found in lower positions of the ranking.

In determination block 1723, the processing system may determine if the result is accurate enough. If the top embedding in every ranking is correct, it is checked if the result is accurate enough for the desired scope.

In block 1724, the processing system may retrieve overlapped/smaller regions. If it is not accurate enough, it is possible to generate overlapped patches in the region of the original one to improve the results, making the process more robust to shifts; or to select a smaller region to apply the same process iteratively in a multiphase solution, perhaps needing to calculate new embeddings for the new region.

In block 1725, the processing system may calculate the relative tile position. If the result is accurate enough, considering the previously set threshold, the processing system may calculate the relative tile position within the reference satellite image.

In block 1726, the processing system may calculate global coordinates. Finally, knowing the relative tile position, the processing system is able to calculate the geolocation of the initial image (i.e., the latitude and longitude). These coordinates, along with additional pointing information, may be combined (e.g., with object detection networks) in order to geolocate objects/features. This block may be skipped if global coordinates are not necessary or cannot be calculated, especially in scenarios where aerial imagery is not used. The process may exit, end, terminate, or finish in block 1727.

The principle of the described RaPID-GEO method lies in moving the computations to the scheduling of the acquisition, where a model of the EO system is used to project individual pixels onto the Earth surface and the associated system state is stored together with the location of each individual pixel in the desired reference frame (e.g., longitude, latitude, altitude). Both the scheduled acquisition operation, which includes the required system state (consisting of for example timing, position, attitude) during acquisition, and a transformation with the Earth reference frame coordinates associated to each pixel, are uploaded to the EO system.

At the image capture phase, the EO system captures the system as scheduled in the scheduling phase. Since a transformation is pre-uploaded on board the EO system that describes the location of each individual pixel of the acquired image, the geolocation of individual pixels may include a lookup of the location parameters of each individual pixel or feature in this transformation.

For example, if a feature of interest is detected in the image, such as a ship, this feature may be placed in the image reference frame by a horizontal and vertical pixel coordinate and those indices may be used to lookup the associated longitude, latitude and altitude of the feature of interest.

The accuracy of the described method may be dependent on the accuracy of the pre acquisition projection of the individual pixels on the Earth surface, as well as the precision with which the EO system is able to execute the predefined acquisition schedule. The former is, among other elements, dependent on the accuracy of the geometric system calibration. The latter is dependent on the system's ability to achieve the pre-scheduled system state. Timing, attitude and position errors may reduce the accuracy and precision of the geolocation solution. However, a well calibrated, measurable, and controllable system may overcome these errors.

FIG. 18 is an activity diagram illustrating an overview of a method 1800 of performing geolocating and georeferencing using the RaPID-GEO method in accordance with various embodiments. Method 1800 may be performed in a computing device (e.g., edge device such as a satellite, etc.) by a processing system encompassing one or more processors, components, or subsystems discussed in this application.

In operation 1802, a processing system in the ground Mission Operation Centre (MOC) may generate a transformation that represents the location of pixel values of the scheduled image acquisition in a reference frame that locates these pixel values on Earth (e.g., longitude, latitude, altitude).

In operation 1804, the transformation is uploaded to a satellite before the satellite captures an image during a scheduled image acquisition.

In operation 1806, the transformation may be stored on the satellite.

Once the scheduled acquisition begins, the processing system may capture images in operation 1808. These images may be georeferenced directly with the uploaded transformation, or image processing techniques and/or artificial intelligence may be used to detect features in the captured data in operation 1810.

In operation 1812, the processing system may geolocate these features by looking up the pixel locations in the pre-uploaded transformation.

In operation 1814, on a satellite with a low latency and highly available data link, such as an IoT communication link, the geolocated features may be sent to User Equipment on ground in real-time.

In operation 1816, if a feature is of interest, the User Equipment may trigger an alert for users. An example of an alert is the detection of a forest fire in the captured image on the spacecraft.

Alternatively, or in addition to this real-time insight delivery, the satellite may in operation 1818 notify a follow-on satellite if an inter-satellite link or another communication method that allows the transfer of data to other spacecraft is available. In this "tip and cue" scenario, the follow-on satellite captures the region of interest autonomously in operation 1820 based on the features identified by the main satellite. This allows constellations of satellites to automatically capture more information of value.

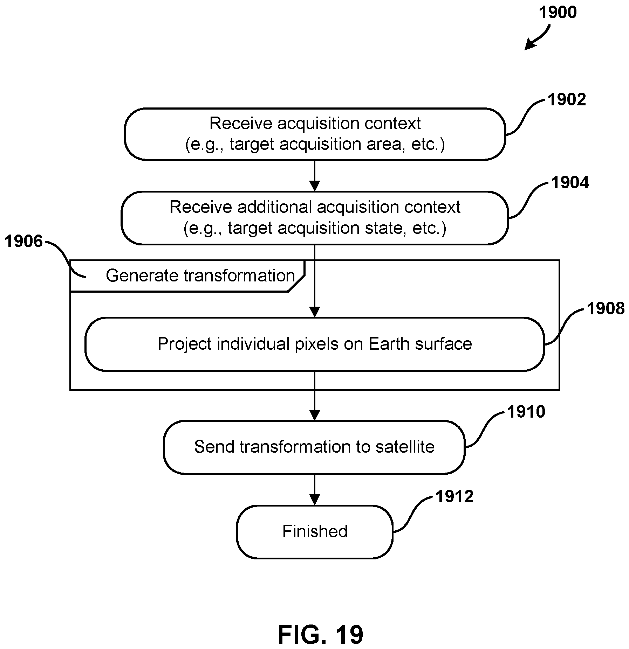

FIG. 19 is a process flow diagram illustrating the parts of the RaPID-GEO method performed by the MOC configured in accordance with some embodiments. Method 1900 may be performed in a computing device (e.g., MOC, etc.) by a processing system encompassing one or more processors, components, or subsystems discussed in this application. All blocks may be performed before the image is captured by the satellite.

In block 1902, the processing system may receive acquisition area information that includes a target acquisition area and/or the exact area that is planned to be captured by the satellite. In block 1904, the processing system may receive acquisition area information that includes a target acquisition state and/or the state of the satellite and the acquisition target. The target acquisition state may include the attitude and altitude of the satellite, and the time and date of image capture.

In block 1906, the processing system uses the acquisition context and state in order to generate a transformation, including the parameters that translate each individual pixel to a location in the Earth reference frame. The processing system may do this by projecting individual pixels onto the surface of the Earth. The information required to perform this projection (e.g., optical parameters of the imager, a Digital Elevation Map (DEM) of the Earth) may be present at the MOC.

In block 1910, the processing system sends the transformation to the satellite. The process may exit, end, terminate, or finish in block 1912.

FIG. 20 is a process flow diagram illustrating the parts of the RaPID-GEO method 2000 performed by the edge device (e.g., satellite) configured in accordance with some embodiments. Method 2000 may be performed in a computing device (e.g., edge device such as a satellite, etc.) by a processing system encompassing one or more processors, components, or subsystems discussed in this application.

In block 2002, the satellite may receive the transformation that includes the information required to translate the captured information to the Earth reference frame over a communication channel from the MOC. In block 2004, the satellite may store the transformation for future reference.

In block 2006, the satellite captures an image once it arrives at the scheduled acquisition time and location and it is in the scheduled state (e.g., it has assumed the correct attitude and attitude rates).

In block 2008, the satellite may perform image feature extraction (e.g., using a neural network) on the captured image in order to extract the relevant features. Examples of features of potential interest include ships, forest fires, methane leaks, and land use classes.

In block 2010, the satellite geolocates the first extracted feature by looking up the associated location(s) in the Earth reference frame of the pixel(s) including the feature in the stored transformation.

In block 2012, the satellite may perform one of more actions in response to geolocating a feature. In block 2014, the satellite may transmit the geolocated feature to a user equipment on the ground via a persistent communication channel (e.g., an inter-satellite communication channel, IoT link, a geostationary relay), or via some other link that may have a very limited bandwidth. Thus, users on ground may be notified of events and features detected by a satellite in real-time and with accurate location information of those events and features (without requiring the image itself to be transmitted, which may not be practical for most IoT type satellite links). In block 2016, the satellite may transfer the geolocated feature to another satellite via an inter-satellite communication channel, IoT link or a geostationary relay. This satellite may then be autonomously scheduled to capture the identified location of interest on Earth when an image acquisition window is identified using on-board planning software. This enables rapid and autonomous acquisition of information of locations of interest. Blocks 2014 and 2016 may be performed concurrently or separately, and they may be performed after each feature is geolocated or after all features are geolocated.

In determination block 2018, the satellite determines if there are more geolocated features to process. In response to determining that there are unprocessed geolocated features (i.e., block 2018="Yes"), then blocks 2010-2016 may be repeated.

In response to determining that there are no unprocessed geolocated features (i.e., block 2018="No"), then the process may exit, end, terminate, or finish in block 2020.

Various embodiments of the proposed system may involve the calculation and storage of the location of pixel values projected on the Earth surface in a mathematical description other than a transformation. Examples include the storage of the predicted corners of a quadrilateral area on the Earth surface and the slope between corners. This information may be transferred to the satellite instead of a transformation, where an onboard software function may be called to relate a pixel to a location on Earth. Other alternatives may include the calculation of a polynomial on the ground that describes the predicted pixel location in the captured image, and subsequently uploading this polynomial to the satellite.

In some embodiments, the processing system may be configured to perform geolocation operations onboard or in conjunction with ground-based systems.

In some embodiments, the processing system may be configured to perform DiPAGEO operations for onboard georeferencing using neural networks, including the calculation and transmission of feature details, image embeddings, and satellite metadata from the satellite to the ground for further processing. In some embodiments, the processing system may be a satellite processing system configured to capture initial satellite images, detect features, calculate embeddings using a neural network model, retrieve satellite metadata, and transmit embeddings and metadata to ground for the processing. In some embodiments, the processing system may be a MOC processing system configured to receive embeddings and metadata, retrieve approximate region, calculate or retrieve reference embeddings, rank closest matches, discard incorrect matches, and calculate final position and geolocate features.

In some embodiments, the processing system may be configured to use neural networks and embedding layers to encode image features into high-dimensional vectors for comparison with reference data.

In some embodiments, the processing system may be configured to perform triplet loss operations that include using anchor, positive, and negative samples to improve feature distances.

In some embodiments, the processing system may be configured to perform multi-similarity loss operations to improve intra-group and inter-group features for more robust model training.

In some embodiments, the processing system may be configured to perform data augmentation techniques like image shifting, rotating, and using off-nadir imagery to improve the neural network's robustness and resilience to real-world variations.

In some embodiments, the processing system may be configured to perform preprocessing operations that include cropping, scaling, etc. to align input images with geographic regions.

In some embodiments, the processing system may be configured to implement techniques such as masking, data augmentation, or feature removal to improve model robustness.

In some embodiments, the processing system may be configured to use images from different times of year or wavelengths to build resilience against environmental changes.

In some embodiments, the processing system may be configured to pre-calculate embeddings or compute them on the fly, using overlapping regions and metadata for more accurate matching.

In some embodiments, the processing system may be configured to use satellite data like time, GSD, and coordinates to refine embedding comparisons and georeferencing accuracy.

In some embodiments, the processing system may be configured to compare embeddings with reference data using similarity metrics (e.g., cosine similarity, etc.) and apply clustering algorithms for matching.

In some embodiments, the processing system may be configured to implement patch selection strategies that include random, corner-based, or metric-driven tile selection (e.g., based on entropy) for extracting the most relevant image regions.

In some embodiments, the processing system may be configured to use overlapping embeddings and pyramidal approaches to progressively narrow the search region for higher accuracy.

In some embodiments, the processing system may be configured to perform DiPAGEO and/or RaPID-GEO operations onboard satellites with metadata transmitted to ground-based MOCs for final georeferencing and localization.

In some embodiments, the processing system may be configured to apply geolocation to identify objects (e.g., vehicles, ships, geographical features, etc.) in various different types of images.

In some embodiments, the processing system may be configured to combine geolocation data with object detection networks to more precisely locate and identify features within geographic coordinates.

In some embodiments, the processing system may be configured to use fixed or adaptive thresholds to account for image distortions and position variations during patch matching.

In some embodiments, the processing system may be configured to use methods such as RANSAC to filter out incorrectly matched patches and improve system accuracy.

In some embodiments, the processing system may be configured to perform multi-satellite collaboration operations, which may include sharing image embeddings between satellites for collaborative georeferencing and change detection in specific regions.

In some embodiments, the processing system may be configured to perform RaPID-GEO operations for georeferencing that include pre-uploading pixel transformations or projections from ground-based processing systems to satellites to allow for direct onboard geolocation. For example, the processing system may generate and upload pixel transformation to the satellite before image capture to allow for onboard georeferencing on the satellite by referencing pre-uploaded transformations. In some embodiments, the processing system may be a satellite processing system configured to capture images and geolocates features using the stored transformation for near-real-time geolocation and communication to ground users or follow-on satellites. In some embodiments, the satellite processing system may be configured to process images, extract features using neural networks, and transmit geolocated features or alerts to users or other satellites.

In some embodiments, the processing system may be configured to perform pre-scheduled acquisition in RaPID-GEO by scheduling image captures based on satellite state (e.g., timing, position, attitude) and pre-uploading projections for real-time georeferencing during image capture.

In some embodiments, the processing system may be configured to use the pre-computed projections (e.g., pixel-to-Earth location mappings) to geolocate captured images or features onboard the satellite.

Some embodiments may include methods of geolocating and georeferencing of sensing data at remote sources, including capturing, in an edge device, an image, detecting, in the edge device, a feature in the image, determining the geolocation for the feature, and sending a message including the geolocated feature. In some embodiments, the methods may include generating a transformation in a centralized site, sending the transformation to an edge device, and saving the transformation in the edge device. In some embodiments, determining the geolocation for the feature may include determining the geolocation for the feature using the transformation in the edge device. In some embodiments, sending a message including the geolocated feature may include the edge device sending a message including the geolocated feature to at least one of the ground-based user equipment and a follow-on satellite. In some embodiments, determining the geolocation for the feature may include determining, in the edge device, at least one embedding for the feature, sending the embedding to a centralized site, and determining, in the centralized site, the geolocation for the feature using the embedding. In some embodiments, sending a message including the geolocated feature may include the centralized site sending a message including the geolocated feature to at least one of the ground-based user equipment and a follow-on satellite.

Some embodiments may include methods performed by a processing system in a satellite for detecting and geolocating features in satellite-captured images, which may include receiving a trained neural network model and an acquisition context from a MOC, storing the received neural network model and acquisition context in an onboard memory of the satellite for use during subsequent image capture and processing operations, capturing an image of a geographic region of interest based on the acquisition context (the acquisition context identifying the position and orientation of the satellite for image capture), detecting features within the captured image by applying the received neural network model (in which the neural network segments the image to identify pixels representing the detected features), clustering the segmented pixels to group them into clusters corresponding to detected features, tiling the captured image into smaller image tiles that each include a portion of the detected features, selecting tiles that are rich in information or spatially dispersed around detected features for further processing, generating embeddings (that encapsulate geographic features of the tiles) for the selected tiles using the received neural network model, and transmitting the generated tile embeddings and associated metadata to the MOC for further geolocation analysis.

In some embodiments, the acquisition context may include satellite positioning commands, feature detection methods, and image capture instructions. In some embodiments, clustering the segmented pixels to group them into clusters corresponding to detected features may further include removing outliers and determining the centroid or boundary of each feature cluster. In some embodiments, the method may further include filtering the selected tiles based on their relevance to the detected features or image quality. In some embodiments, the method may further include removing noisy or irrelevant data during tile selection and preprocessing to improve processing efficiency. In some embodiments, the detected features may represent specific events or conditions. In some embodiments, transmitting the generated tile embeddings and associated metadata may include transmitting metadata that includes size and probability metrics for each detected feature.

Some embodiments may include methods performed by a processing system in a MOC for processing satellite imagery data for geolocation, which may include transmitting to a satellite a trained neural network model that is configured to process satellite-captured image tiles, selecting a geographic region of interest based on environmental conditions or risk factors for events, dividing historical Earth Observation (EO) imagery of the selected geographic region into smaller image tiles that are associated with precise geolocation data, generating embeddings (that represent select geographic features of the tile) for each preprocessed tile using the trained neural network model, sending to the satellite an acquisition context that includes commands for image capture and feature detection methods for monitoring the selected region of interest, receiving satellite-generated tile embeddings and associated metadata that includes information related to the detected features, retrieving from a database ground tile embeddings that correspond to the geographic region identified in the acquisition context, comparing the satellite tile embeddings with the ground tile embeddings to identify matching pairs based on similarity metrics, generating a transformation between the satellite tile embeddings and the ground tile embeddings (in which the transformation aligns the pixel coordinates of the satellite imagery with georeferenced geographic coordinates), calculating the geolocation of detected features by applying the transformation to the pixel coordinates of the satellite-generated tile embeddings, and transmitting the calculated geolocation and associated metadata to an external system for further analysis or real-time action.

In some embodiments, the method may further include training the neural network using datasets of ground and satellite images to generate embeddings (that encapsulate geographic features relevant to geolocation tasks) for image tiles. In some embodiments, receiving satellite-generated tile embeddings and associated metadata that includes information related to the detected features may include receiving metadata that includes probability metrics and cluster sizes for detected features. In some embodiments, the method may further include preprocessing the image tiles to conform to the input requirements of the neural network, in which the preprocessing of image tiles includes at least one or more of noise reduction, contrast adjustment, and normalization. In some embodiments, sending an acquisition context to the satellite may include sending satellite positioning and sensor configurations for image capture to the satellite.

In some embodiments, transmitting the calculated geolocation and associated metadata to an external system for further analysis or real-time action may include transmitting the calculated geolocation and associated metadata to emergency services or external monitoring systems for initiating real-time responses to detected features.

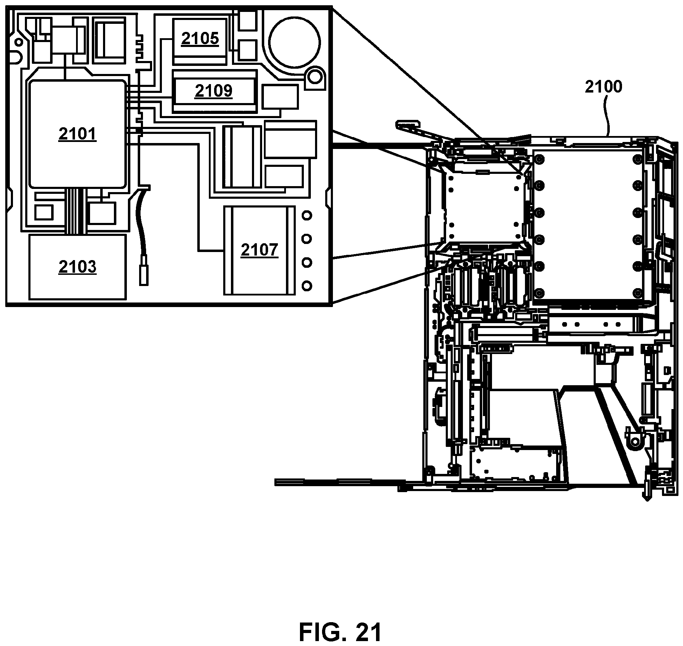

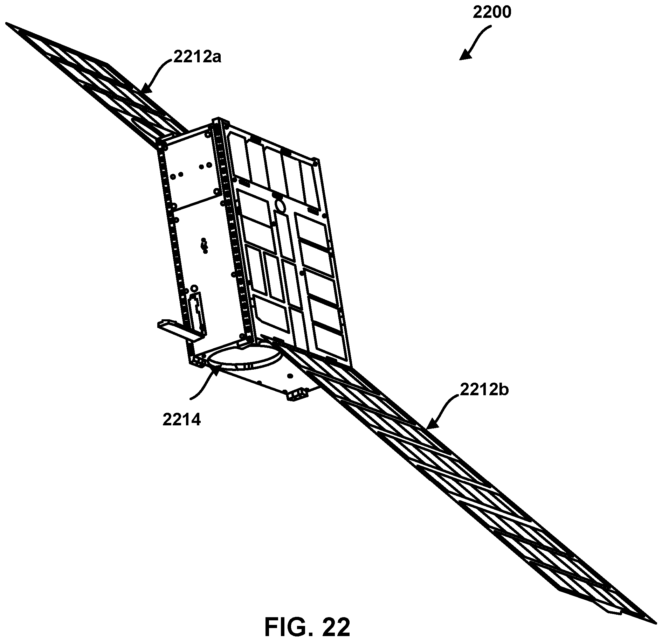

The various embodiments may be implemented on different types of computing devices, including modern satellites such as the BoxSat 2100 illustrated in FIGs. 21 and 22. The BoxSat 2100 may include a processor 2101 connected to memory 2103, which may include both volatile and large-capacity nonvolatile memory. The BoxSat 2100 may also include network access ports, communication circuitry, or a transceiver 2105 connected to the processor 2101 for establishing network data connections. Solar panels 2212a and 2212b may supply power to the satellite by converting solar energy into electrical energy that supports sustainable satellite operations. The BoxSat 2100 may also include various instruments and sensors 2107 for data collection and environmental monitoring, which may include cameras 2214, temperature sensors, and radiation detectors, depending on mission objectives. In addition, the BoxSat 2100 may include attitude control systems 2109 to maintain proper orientation in space and for accurate positioning and data collection. These components may be integrated into a compact and durable structure that allows the BoxSat 2100 to carry out complex operations in the demanding environment of space.

The various embodiments may be implemented on any of a variety of commercially available server devices, such as the server 2300 illustrated in FIG. 21. The server device 2300 may include one or more processors 2301 (e.g., multi-core processor, etc.) coupled to volatile memory 2302, such as RAM, and a large capacity nonvolatile memory, such as a solid-state drive (SSD) 2303. The server device 2300 may also include additional storage interfaces such as USB ports and NVMe slots coupled to the processor 2301. The server device 2300 may include network access ports 2306 coupled to the processor 2301 that allow data connections through a network interface card (NIC) 2304 and a communication network 2307 (e.g., an Internet Protocol (IP) network) connected to other network elements.

The processor 2301 may be any programmable microprocessor, microcomputer or multiple processor chip or chips that may be configured by software instructions (applications) to perform a variety of functions, including the functions of the various embodiments described below. Multiple processors 2301 may be provided, such as one processor dedicated to wireless communication functions and one processor dedicated to running other applications. Typically, software applications may be stored in the internal memory 2302, 2303 before they are accessed and loaded into the processor 2301. The processor 2301 may include internal memory sufficient to store the application software instructions.

For the sake of clarity and ease of presentation, the methods discussed in this application are presented as separate embodiments. While each method is delineated for illustrative purposes, it should be clear to those skilled in the art that various combinations or omissions of these methods, blocks, operations, etc. could be used to achieve a desired result or a specific outcome. It should also be understood that the descriptions herein do not preclude the integration or adaptation of different embodiments of the methods, blocks, operations, etc. from producing a modified or alternative result or solution. The presentation of individual methods, blocks, operations, etc. should not be interpreted as mutually exclusive, limiting, or as being required unless expressly recited as such in the claims.

The processors or processing units discussed in this application may be any programmable microprocessor, microcomputer, or multiple processor chip or chips that can be configured by software instructions (applications) to perform a variety of functions, including the functions of various embodiments described. In some computing devices (MOC, satellite, etc.), multiple processors may be provided, such as one processor within first circuitry dedicated to wireless communication functions and one processor within second circuitry dedicated to running other applications. Software applications may be stored in the memory before they are accessed and loaded into the processor. The processors may include internal memory sufficient to store the application software instructions.

Implementation examples are described in the following paragraphs. While some of the following implementation examples are described in terms of example methods, further example implementations may include: the example methods discussed in the following paragraphs implemented by a computing device or computing system including at least one processor of a processing system coupled to memory and configured (e.g., with processor-executable instructions) to perform operations of the methods of the following implementation examples; the example methods discussed in the following paragraphs implemented by a computing system including means for performing functions of the methods of the following implementation examples; and the example methods discussed in the following paragraphs may be implemented as a non-transitory processor-readable storage medium having stored thereon processor-executable instructions configured to cause a processor of a computing system to perform the operations of the methods of the following implementation examples.

Example 1: A method performed by at least one processor in a processing system of a satellite for detecting and geolocating features in satellite-captured images including receiving from a mission operations center (MOC) an acquisition context and a transformation for mapping pixel coordinates to geographic coordinates, storing the acquisition context and transformation in onboard memory, capturing one or more images, detecting one or more features in the one or more captured images, processing the detected features by filtering noise and clustering contiguous features, applying the transformation to the pixel coordinates of the processed detected features to determine geographic coordinates of the detected features, generating geolocation data for the detected features based on the geographic coordinates, and transmitting the geolocation data and associated metadata over a low-bandwidth link.

Example 2: The method of example 1, may further include receiving from the MOC the acquisition context and the transformation for mapping pixel coordinates to geographic coordinates includes receiving from the MOC the acquisition context and a matrix that defines the relationship between pixel coordinates in the captured images and corresponding geographic coordinates, in which the matrix is applied to each pixel in the detected features to compute the precise geographic location of the features.

Example 3: The method of either of examples 1 or 2, in which receiving from the MOC the acquisition context and the transformation for mapping pixel coordinates to geographic coordinates includes receiving from the MOC the acquisition context and a function that computes geographic coordinates based on the pixel coordinates, the satellite's orientation, and environmental factors.

Example 4: The method of any of examples 1-3, in which receiving from the MOC the acquisition context and the transformation for mapping pixel coordinates to geographic coordinates further includes receiving a feature detection method information structure that identifies a technique for identifying, detecting, or extracting relevant features or patterns from images.

Example 5: The method of any of examples 1-4, in which detecting one or more features in the one or more captured images includes using a neural network to detect the one or more features in the one or more captured images.

Example 6: The method of any of examples 1-5, in which transmitting the geolocation data and associated metadata over the low-bandwidth link includes transmitting geolocation and type data over the low-bandwidth link.

Example 7: The method of any of examples 1-6, in which transmitting the geolocation data and associated metadata over the low-bandwidth link includes downscaling the images to generate thumbnails and sending the generated thumbnails over the low-bandwidth link.

Example 8: The method of any of examples 1-7, in which transmitting the geolocation data and associated metadata over the low-bandwidth link includes transmitting the geolocation data and associated metadata to the MOC over the low-bandwidth link.

Example 9: The method of any of examples 1-8, in which transmitting the geolocation data and associated metadata over the low-bandwidth link includes transmitting the geolocation data and associated metadata to ground-based user equipment over the low-bandwidth link.

Example 10: The method of any of examples 1-9, in which transmitting the geolocation data and associated metadata over the low-bandwidth link includes transmitting over the low-bandwidth link the geolocation data and associated metadata to a follow-on satellite deployed at the extreme network edge

As used in this application, terminology such as "component," "module," "system," etc., is intended to encompass a computer-related entity. These entities may involve, among other possibilities, hardware, firmware, a blend of hardware and software, software alone, or software in an operational state. As examples, a component may encompass a running process on a processor, the processor itself, an object, an executable file, a thread of execution, a program, or a computing device. To illustrate further, both an application operating on a computing device and the computing device itself may be designated as a component. A component might be situated within a single process or thread of execution or could be distributed across multiple processors or cores. In addition, these components may operate based on various non-volatile computer-readable media that store diverse instructions and/or data structures. Communication between components may take place through local or remote processes, function, or procedure calls, electronic signaling, data packet exchanges, memory interactions, among other known methods of network, computer, processor, or process-related communications.

A variety of memory types and technologies, both currently available and anticipated for future development, may be incorporated into systems and computing devices that implement the various embodiments. These memory technologies may include non-volatile random-access memories (NVRAM) such as magnetoresistive RAM (MRAM), resistive random-access memory (ReRAM or RRAM), phase-change memory (PCM, PC-RAM, or PRAM), ferroelectric RAM (FRAM), spin-transfer torque magnetoresistive RAM (STT-MRAM), and three-dimensional cross point (3D XPoint) memory. Non-volatile or read-only memory (ROM) technologies may also be included, such as programmable read-only memory (PROM), field programmable read-only memory (FPROM), and one-time programmable non-volatile memory (OTP NVM). Volatile random-access memory (RAM) technologies may further be utilized, including dynamic random-access memory (DRAM), double data rate synchronous dynamic random-access memory (DDR SDRAM), static random-access memory

(SRAM), and pseudostatic random-access memory (PSRAM). Additionally, systems and computing devices implementing these embodiments may use solid-state non-volatile storage mediums, such as FLASH memory. The aforementioned memory technologies may store instructions, programs, control signals, and/or data for use in computing devices, system-on-chip (SoC) components, or other electronic systems. Any references to specific memory types, interfaces, standards, or technologies are provided for illustrative purposes and do not limit the claims to any particular memory system or technology unless explicitly recited in the claim language.

The foregoing method descriptions and the process flow diagrams are provided merely as illustrative examples and are not intended to require or imply that the blocks of the various aspects may be performed in the order presented. As will be appreciated by one of skill in the art the order of steps in the foregoing aspects may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be embodied in a processor-executable software module that resides on a non-transitory computer-readable or processor-readable storage medium. Non-transitory computer-readable or processor-readable storage media include any storage media that may be accessed by a computer or processor. By way of example, but not limitation, such non-transitory computer-readable or processor-readable media may include RAM, ROM, EEPROM, flash memory, SSDs, NVMe drives, 3D NAND flash, or any other medium capable of storing program code in the form of instructions or data structures that may be accessed by a computer. Cloud-based storage solutions, including infrastructure-as-a-service (IaaS) platforms, may provide scalable and distributed options for storing and accessing program code. In addition, the operations of a method or algorithm may reside as one or more sets of instructions or code on a non-transitory processor-readable or computer-readable medium, which may be incorporated into a computer program product. Emerging technologies, such as quantum computing storage media and blockchain-based storage solutions, may enhance data integrity and security. AI and ML-improved hardware accelerators, such as GPUs, TPUs, and other dedicated processing units, may be used to efficiently execute complex algorithms.

The preceding description of the disclosed aspects is provided to enable any person skilled in the art to make or use the present invention. Various modifications to these aspects will be readily apparent to those skilled in the art, and the generic principles defined herein may be applied to other aspects without departing from the spirit or scope of the invention. Thus, the present invention is not intended to be limited to the aspects shown herein but is to be accorded the widest scope consistent with the following claims and the principles and novel features disclosed herein.

## Claims

1. A method performed by a processing system in a satellite for detecting and geolocating features in satellite-captured images, comprising:
receiving from a mission operations center (MOC) an acquisition context and a transformation for mapping pixel coordinates to geographic coordinates;
storing the acquisition context and transformation in onboard memory;
capturing one or more images;
detecting one or more features in the one or more captured images;
processing the detected features by filtering noise and clustering contiguous features;
applying the transformation to the pixel coordinates of the processed detected features to determine geographic coordinates of the detected features;
generating geolocation data for the detected features based on the geographic coordinates; and
transmitting the geolocation data and associated metadata over a low-bandwidth link.

2. The method of claim 1, wherein receiving from the MOC the acquisition context and the transformation for mapping pixel coordinates to geographic coordinates comprises receiving from the MOC the acquisition context and a matrix that defines the relationship between pixel coordinates in the captured images and corresponding geographic coordinates, wherein the matrix is applied to each pixel in the detected features to compute the precise geographic location of the features.

3. The method of claim 1 or 2, wherein receiving from the MOC the acquisition context and the transformation for mapping pixel coordinates to geographic coordinates comprises receiving from the MOC the acquisition context and a function that computes geographic coordinates based on the pixel coordinates, the satellite's orientation, and environmental factors.

4. The method of any preceding claim, wherein receiving from the MOC the acquisition context and the transformation for mapping pixel coordinates to geographic coordinates further comprises receiving a feature detection method information structure that identifies a technique for identifying, detecting, or extracting relevant features or patterns from images.

5. The method of any preceding claim, wherein detecting one or more features in the one or more captured images comprises using a neural network to detect the one or more features in the one or more captured images.

6. The method of any preceding claim, wherein transmitting the geolocation data and associated metadata over the low-bandwidth link comprises transmitting geolocation and type data over the low-bandwidth link.

7. The method of any preceding claim, wherein transmitting the geolocation data and associated metadata over the low-bandwidth link comprises downscaling the images to generate thumbnails and sending the generated thumbnails over the low-bandwidth link.

8. The method of any preceding claim, wherein transmitting the geolocation data and associated metadata over the low-bandwidth link comprises transmitting the geolocation data and associated metadata to the MOC over the low-bandwidth link.

9. The method of any preceding claim, wherein transmitting the geolocation data and associated metadata over the low-bandwidth link comprises transmitting the geolocation data and associated metadata to ground-based user equipment over the low-bandwidth link.

10. The method of any preceding claim, wherein transmitting the geolocation data and associated metadata over the low-bandwidth link comprises transmitting over the low-bandwidth link the geolocation data and associated metadata to a follow-on satellite deployed at the extreme network edge.

11. A satellite, comprising: comprising:
a processing system configured to:
receive from a mission operations center (MOC) an acquisition context and a transformation for mapping pixel coordinates to geographic coordinates;
store the acquisition context and transformation in onboard memory;
capturing one or more images;
detect one or more features in the one or more captured images; process the detected features by filtering noise and clustering contiguous features;
apply the transformation to the pixel coordinates of the processed detected features to determine geographic coordinates of the detected features;
generate geolocation data for the detected features based on the geographic coordinates; and
transmit the geolocation data and associated metadata over a low-bandwidth link.

12. The satellite of claim 11, wherein the processing system is configured to receive from the MOC the acquisition context and the transformation for mapping pixel coordinates to geographic coordinates by receiving from the MOC the acquisition context and a matrix that defines the relationship between pixel coordinates in the captured images and corresponding geographic coordinates, wherein the matrix is applied to each pixel in the detected features to compute the precise geographic location of the features.

13. The satellite of claim 11 or 12, wherein the processing system is configured to receive from the MOC the acquisition context and the transformation for mapping pixel coordinates to geographic coordinates by receiving from the MOC the acquisition context and a function that computes geographic coordinates based on the pixel coordinates, the satellite's orientation, and environmental factors.

14. The satellite of any one of claims 11 to 13, wherein the processing system is further configured to receive a feature detection method information structure that identifies a technique for identifying, detecting, or extracting relevant features or patterns from images.

15. The satellite of any one of claims 11 to 14, wherein the processing system is configured to detect one or more features in the one or more captured images vy using a neural network to detect the one or more features in the one or more captured images.

16. The satellite of any one of claims 11 to 15, wherein the processing system is configured to transmit the geolocation data and associated metadata over the low-bandwidth link by transmitting geolocation and type data over the low-bandwidth link.

17. The satellite of any one of claims 11 to 16, wherein the processing system is configured to transmit the geolocation data and associated metadata over the low-bandwidth link by downscaling the images to generate thumbnails and sending the generated thumbnails over the low-bandwidth link.

18. The satellite of any one of claims 11 to 17, wherein the processing system is configured to transmit the geolocation data and associated metadata over the low-bandwidth link by transmitting the geolocation data and associated metadata to the MOC over the low-bandwidth link.

19. The satellite of any one of claims 11 to 18, wherein the processing system is configured to transmit the geolocation data and associated metadata over the low-bandwidth link by transmitting the geolocation data and associated metadata to ground-based user equipment over the low-bandwidth link.

20. The satellite of any one of claims 11 to 19, wherein the processing system is configured to transmit the geolocation data and associated metadata over the low-bandwidth link by transmitting over the low-bandwidth link the geolocation data and associated metadata to a follow-on satellite deployed at the extreme network edge.

21. A non-transitory processor-readable storage medium having stored thereon processor-executable instructions to cause a processing system to perform various operations for detecting and geolocating features in satellite-captured images, the operations comprising:
receiving from a mission operations center (MOC) an acquisition context and a transformation for mapping pixel coordinates to geographic coordinates;
storing the acquisition context and transformation in onboard memory;
capturing one or more images;
detecting one or more features in the one or more captured images;
processing the detected features by filtering noise and clustering contiguous features;
applying the transformation to the pixel coordinates of the processed detected features to determine geographic coordinates of the detected features;
generating geolocation data for the detected features based on the geographic coordinates; and
transmitting the geolocation data and associated metadata over a low-bandwidth link.
